(19) 

Europäisches Patentamt
European Patent Office
Office européen des brevets

(11) **EP 3 499 672 A1**

(12) **EUROPEAN PATENT APPLICATION**

(43) Date of publication:
**19.06.2019 Bulletin 2019/25**

(51) Int Cl.:
*H02J 3/01* (2006.01)     *H02J 3/38* (2006.01)
*H02J 3/46* (2006.01)

(21) Application number: **18211065.0**

(22) Date of filing: **07.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.12.2017 CN 201711345555**

(71) Applicant: **Delta Electronics (Shanghai) Co., Ltd.
201209 Shanghai (CN)**

(72) Inventors:
• **LIU, Jinjun**
  **Pudong, Shanghai 201209 (CN)**
• **LIU, Baojin**
  **Pudong, Shanghai 201209 (CN)**
• **WU, Teng**
  **Pudong, Shanghai 201209 (CN)**

(74) Representative: **Cabinet Beau de Loménie
158, rue de l'Université
75340 Paris Cedex 07 (FR)**

(54) **METHOD AND DEVICE FOR CONTROLLING DISTRIBUTION OF UNBALANCED AND HARMONIC POWER AMONG PARALLEL INVERTERS**

(57)     A method for distributing unbalanced and harmonic power among a plurality of inverters connected in parallel and operating in an islanded state, by respectively injecting an small-AC-signal in each inverter, including: sampling (S201) an output voltage and an output current of each inverter, extracting a fundamental positive sequence component, a fundamental negative sequence component, at least one major order of harmonic component from the current, and current components of the small-AC-signal; calculating (S202) an active power and a reactive power of the inverter, calculating the unbalanced and harmonic power; calculating (S203) a frequency and an amplitude of a fundamental positive sequence reference voltage, calculating (S204) a frequency reference value of the small-AC-signal; calculating (S206) a virtual impedance; calculating a voltage drop (S207) of the virtual impedance; generating (S208) a total reference voltage; and regulating the output voltage of the inverter to follow the total reference voltage.

Fig.3A

**Description**

TECHNICAL FIELD

The present disclosure relates to a power coordinated control technology for a grid, in particular to a method and a device for controlling evenly distributing unbalanced load and harmonic power among multiple parallel inverters in an islanded microgrid.

BACKGROUND

Since the environmental problems and energy crisis become increasingly prominent, more and more attention has been paid to new energy power generation technology. A micro power grid (referred to as microgrid hereinafter) is an intelligent power supply system composed of renewable energy (such as photovoltaic and wind power), energy storage system and distributed loads that cooperated with each other in a certain region. Such an intelligent power supply system makes utilization of the electrical energy more reliable and flexible. In most cases, the microgrid is connected to a busbar via a power electronic interface device, such as an inverter. Therefore, coordinated control among parallel inverters is one of the key factors determining whether the microgrid can operate stably and efficiently. Under normal circumstances, the microgrid operates in grid-connected mode and injects or absorbs power to or from the grid according to the control command. When faults occur in the grid, the microgrid should be able to switch into an islanded operation state and maintain the power supply for critical loads.

For the islanded microgrid, it is desirable to distribute load power evenly among all parallel inverters depending on the capacities thereof, in order to prevent the inverters from being overloaded and ensure the reliable operation of the microgrid. At present, droop control is widely employed and it can realize even distribution of active power and reactive power among parallel inverters without relying on a communication line. However, it cannot realize even distribution of the unbalanced and harmonic power.

To solve the above problem, some solutions have been proposed, such as, controlling the inverter as a conductance at the fundamental negative frequency and harmonic frequency to adjust the unbalanced and harmonic power distribution. Also, in some literature, it is proposed to add virtual impedance controller or secondary controller to realize even distribution of the unbalanced and harmonic power. However, most of the existing methods have poor accuracy, and have drawbacks such as relying on interconnected communication lines, requiring measurement of line impedances, or a centralized controller, which limit the promotion and application.

SUMMARY

According to a first aspect of the present disclosure, there is provided a method for distributing unbalanced and harmonic power among a plurality of inverters connected in parallel, wherein each of the plurality of inverters operates in an islanded state, each of the inverters is injected with an small-AC-signal to control the distribution of the unbalanced and harmonic power, and an amplitude of the small-AC-signal is $E_{ss}^*$. The method further includes: step 1: sampling an output voltage and an output current of each inverter, and extracting a fundamental positive sequence component of the current, a fundamental negative sequence component of the current, at least one major order of harmonic component of the current, and current components of the small-AC-signal according to the output current; step 2: calculating an active power $P$ and a reactive power $Q$ of the inverter according to the output voltage and the fundamental positive sequence component of the current of the inverter, and calculating the unbalanced and harmonic power $Q_{UH}$ according to the fundamental negative sequence component of the current and the at least one major order of harmonic component of the current; step 3: calculating a frequency and an amplitude of a fundamental positive sequence reference voltage according to the active power P and the reactive power Q of the inverter; step 4: calculating a frequency reference value $\omega_{ss}^*$ of the small-AC-signal according to the unbalanced and harmonic power $Q_{UH}$; step 5: calculating the active power $P_{ss}$ generated by the small-AC-signal according to the amplitude $E_{ss}^*$ of the small-AC-signal, the frequency reference value $\omega_{ss}^*$ of the small-AC-signal, and the current components of the small-AC-signal; step 6: calculating a virtual impedance $L_v$ according to the active power $P_{ss}$ generated by the small-AC-signal; step 7: calculating a voltage drop of the virtual impedance according to the virtual impedance $L_v$, the fundamental negative sequence component of the current, the at least one major order of harmonic component of the current, and the frequency of the fundamental positive sequence reference voltage; step 8: generating a total reference voltage according to the frequency and amplitude of the fundamental positive sequence reference voltage, the voltage drop of the virtual impedance, the amplitude of the small-AC-signal, and the frequency reference value $\omega_{ss}^*$ of the small-AC-signal; and step 9: regulating the output voltage of the inverter to follow the total reference voltage.

According to a second aspect of the present disclosure, there is provided a method for distributing unbalanced power among a plurality of inverters connected in parallel, wherein each of the plurality of inverters operates in an islanded state, each of the inverters is injected with an small-AC-signal to control the distribution of the unbalanced power, and an amplitude of the small-AC-signal is $E_{ss}^*$. The method further includes: step 1: sampling an output voltage and an output current of each inverter, and extracting a fundamental positive sequence component of the current, a fundamental negative sequence component of the current, and current components of the small-AC-signal according to the output current; step 2: calculating an active power P and a reactive power Q of the inverter according to the output voltage and the fundamental positive sequence component of the current of the inverter, and calculating the unbalanced power $Q_U$ according to the fundamental negative sequence component of the current; step 3: calculating a frequency and an amplitude of a fundamental positive sequence reference voltage according to the active power P and the reactive power Q of the inverter; step 4: calculating a frequency reference value $\omega_{ss}^*$ of the small-AC-signal according to the unbalanced power $Q_U$; step 5: calculating the active power $P_{ss}$ generated by the small-AC-signal according to the amplitude $E_{ss}^*$ of the small-AC-signal, the frequency reference value $\omega_{ss}^*$ of the small-AC-signal, and the current components of the small-AC-signal; step 6: calculating a virtual impedance $L_v$ according to the active power $P_{ss}$ generated by the small-AC-signal; step 7: calculating a voltage drop of the virtual impedance according to the virtual impedance $L_v$, the fundamental negative sequence component of the current, and the frequency of the fundamental positive sequence reference voltage; step 8: generating a total reference voltage according to the frequency and amplitude of the fundamental positive sequence reference voltage, the voltage drop of the virtual impedance, the amplitude of the small-AC-signal, and the frequency reference value $\omega_{ss}^*$ of the small-AC-signal; and step 9: regulating the output voltage of the inverter to follow the total reference voltage.

According to a third aspect of the present disclosure, there is provided a method for distributing harmonic power among a plurality of inverters connected in parallel, wherein each of the plurality of inverters operates in an islanded state, each of the inverters is injected with an small-AC-signal to control the distribution of the harmonic power, and an amplitude of the small-AC-signal is $E_{ss}^*$. The method further includes: step 1: sampling an output voltage and an output current of each inverter, and extracting a fundamental positive sequence component of the current, and current components of the small-AC-signal according to the output current; step 2: calculating an active power P and a reactive power Q of the inverter according to the output voltage and the fundamental positive sequence component of the current of the inverter, and calculating the harmonic power $Q_H$ according to the at least one major order of harmonic component of the current; step 3: calculating a frequency and an amplitude of a fundamental positive sequence reference voltage according to the active power P and the reactive power Q of the inverter; step 4: calculating a frequency reference value $\omega_{ss}^*$ of the small-AC-signal according to the harmonic power $Q_H$; step 5: calculating the active power $P_{ss}$ generated by the small-AC-signal according to the amplitude $E_{ss}^*$ of the small-AC-signal, the frequency reference value $\omega_{ss}^*$ of the small-AC-signal, and the current components of the small-AC-signal; step 6: calculating a virtual impedance $L_v$ according to the active power $P_{ss}$ generated by the small-AC-signal; step 7: calculating a voltage drop of the virtual impedance according to the virtual impedance $L_v$, the at least one major order of harmonic component of the current, and the frequency of the fundamental positive sequence reference voltage; step 8: generating a total reference voltage according to the frequency and amplitude of the fundamental positive sequence reference voltage, the voltage drop of the virtual impedance, the amplitude of the small-AC-signal, and the frequency reference value $\omega_{ss}^*$ of the small-AC-signal; and step 9: regulating the output voltage of the inverter to follow the total reference voltage.

According to a fourth aspect of the present disclosure, there is provided a control device for distributing unbalanced and harmonic power among a plurality of inverters connected in parallel, wherein each of the plurality of inverters operates in an islanded state, each of the inverters is injected with an small-AC-signal to control the distribution of the unbalanced and harmonic power, and an amplitude of the small-AC-signal is $E_{ss}^*$. The control device further includes: a sampling and signal extraction module configured to sample an output voltage and an output current of each inverter, and extract a fundamental positive sequence component of the current, a fundamental negative sequence component of the current, at least one major order of harmonic component of the current, and current components of the small-AC-signal according to the output current; a power calculation module configured to calculate an active power P and a reactive power Q of the inverter according to the output voltage and the fundamental positive sequence component of the current of the inverter, and calculate the unbalanced and harmonic power $Q_{UH}$ according to the fundamental negative sequence component of the current and the at least one major order of harmonic component of the current; a positive-sequence-reference-voltage calculation module configured to calculate a frequency and an amplitude of a fundamental positive sequence reference voltage according to the active power P and the reactive power Q of the inverter; an AC-small-signal-frequency-reference-value calculation module configured to calculate a frequency reference value $\omega_{ss}^*$ of the small-AC-signal according to the unbalanced and harmonic power $Q_{UH}$; a small-signal-active-power calculation module configured to calculate the active power $P_{ss}$ generated by the small-AC-signal according to the amplitude $E_{ss}^*$ of the small-AC-signal, the frequency reference value $\omega_{ss}^*$ of the small-AC-signal, and the current components of the small-AC-signal; a virtual-impedance calculation module configured to calculate a virtual impedance $L_v$ according to the active power $P_{ss}$ generated by the small-AC-signal; a voltage-drop calculation module configured to calculate a voltage drop of the virtual impedance according to the virtual impedance $L_v$, the fundamental negative sequence component of the current, the at least one major order of harmonic component of the current, and the frequency of the fundamental positive sequence reference voltage; a total-reference-voltage generation module configured to generate a total reference voltage according to the frequency and amplitude of the fundamental positive sequence reference voltage, the voltage drop of the virtual impedance, the amplitude of the small-AC-signal, and the frequency reference value $\omega_{ss}^*$ of the small-AC-signal; and an output-voltage control module configured to regulate the output voltage of the inverter to follow the total reference voltage.

According to a fifth aspect of the present disclosure, there is provided a control device for distributing unbalanced power among a plurality of inverters connected in parallel, wherein each of the plurality of inverters operates in an islanded state, each of the inverters is injected with an small-AC-signal to control the distribution of the unbalanced power, and an amplitude of the small-AC-signal is $E_{ss}^*$. The control device further includes: a sampling and signal extraction module configured to sample an output voltage and an output current of each inverter, and extract a fundamental positive sequence component of the current, a fundamental negative sequence component of the current, and current components of the small-AC-signal according to the output current; a power calculation module configured to calculate an active power P and a reactive power Q of the inverter according to the output voltage and the fundamental positive sequence component of the current of the inverter, and calculate the unbalanced power $Q_U$ according to the fundamental negative sequence component of the current; a positive-sequence-reference-voltage calculation module configured to calculate a frequency and an amplitude of a fundamental positive sequence reference voltage according to the active power P and the reactive power Q of the inverter; an AC-small-signal-frequency-reference-value calculation module configured to a frequency reference value $\omega_{ss}^*$ of the small-AC-signal according to the unbalanced power $Q_U$; a small-signal-active-power calculation module configured to calculate the active power $P_{ss}$ generated by the small-AC-signal according to the amplitude $E_{ss}^*$ of the small-AC-signal, the frequency reference value $\omega_{ss}^*$ of the small-AC-signal, and the current components of the small-AC-signal; a virtual-impedance calculation module configured to calculate a virtual impedance $L_v$ according to the active power $P_{ss}$ generated by the small-AC-signal; a voltage-drop calculation module configured to calculate a voltage drop of the virtual impedance according to the virtual impedance $L_v$, the fundamental negative sequence component of the current, and the frequency of the fundamental positive sequence reference voltage; a total-reference-voltage generation module configured to generate a total reference voltage according to the frequency and amplitude of the fundamental positive sequence reference voltage, the voltage drop of the virtual impedance, the amplitude of the small-AC-signal, and the frequency reference value $\omega_{ss}^*$ of the small-AC-signal; and an output-voltage control module configured to regulate the output voltage of the inverter to follow the total reference voltage.

According to a sixth aspect of the present disclosure, there is provided a control device for distributing harmonic power among a plurality of inverters connected in parallel, wherein each of the plurality of inverters operates in an islanded state, each of the inverters is injected with an small-AC-signal to control the distribution of the harmonic power, and an amplitude of the small-AC-signal is $E_{ss}^*$. The control device further includes: a sampling and signal extraction module configured to sample an output voltage and an output current of each inverter, and extract a fundamental positive sequence component of the current, and current components of the small-AC-signal according to the output current; a power calculation module configured to calculate an active power P and a reactive power Q of the inverter according to the output voltage and the fundamental positive sequence component of the current of the inverter, and calculate the harmonic power $Q_H$ according to the at least one major order of harmonic component of the current; a positive-sequence-reference-voltage calculation module configured to calculate a frequency and an amplitude of a fundamental positive sequence reference voltage according to the active power P and the reactive power Q of the inverter; an AC-small-signal-frequency-reference-value calculation module configured to calculate a frequency reference value $\omega_{ss}^*$ of the small-AC-signal according to the harmonic power $Q_H$; a small-signal-active-power calculation module configured to calculate the active power $P_{ss}$ generated by the small-AC-signal according to the amplitude $E_{ss}^*$ of the small-AC-signal, the frequency reference value $\omega_{ss}^*$ of the small-AC-signal, and the current components of the small-AC-signal; a virtual-impedance calculation module configured to calculate a virtual impedance $L_v$ according to the active power $P_{ss}$ generated by the small-AC-signal; a voltage-drop calculation module configured to calculate a voltage drop of the virtual impedance according to the virtual impedance $L_v$, the at least one major order of harmonic component of the current, and the frequency of the fundamental positive sequence reference voltage; a total-reference-voltage generation module configured to generate a total reference voltage according to the frequency and amplitude of the fundamental positive sequence reference voltage, the voltage drop of the virtual impedance, the amplitude of the small-AC-signal, and the frequency reference value $\omega_{ss}^*$ of the small-AC-signal; and an output-voltage control module configured to regulate the output voltage of the inverter to follow the total reference voltage.

According to the above aspects of the present disclosure, it can realize even distribution of both of unbalanced power and harmonic power. When the system contains only single-phase load or only unbalanced load, the unbalanced power or the harmonic power can be evenly distributed in a separate manner.

BRIEF DESCRIPTION OF THE DRAWINGS

Exemplary embodiments of the present disclosure will be described in detail below with reference to the accompanying drawings. The above and other objects, features and advantages of the present disclosure will become more apparent. In the accompanying drawings:

Fig. 1 is a topological view of an islanded microgrid to which the present disclosure is applicable;
Fig. 2 is a diagram illustrating an exemplary system framework in accordance with one embodiment of the present disclosure;
Fig. 3A is a flow chart illustrating a method for controlling an inverter to realize even distribution of unbalanced and harmonic power according to a first embodiment of the present disclosure;
Fig. 3B is a flow chart illustrating a method for controlling an inverter to realize even distribution of unbalanced power according to a second embodiment of the present disclosure;
Fig. 3C is a flow chart illustrating a method for controlling an inverter to realize even distribution of harmonic power according to a third embodiment of the present disclosure;
Fig. 3D is a flow chart illustrating a method for controlling an inverter to realize even distribution of harmonic power according to a seventh embodiment of the present disclosure;
Fig. 4 is a schematic diagram illustrating signal extraction in accordance with one embodiment of the present disclosure;
Fig. 5 is a diagram illustrating simulation waveforms of unbalanced and harmonic power output from two inverters in one embodiment of the present disclosure before and after applying the control method of the present disclosure; and
Fig. 6 is a diagram illustrating simulation waveforms of amplitudes of a fundamental positive sequence current, a fundamental negative sequence current, a fifth harmonic current, and a seventh harmonic current output from two inverters in one embodiment of the present disclosure.

DETAILED DESCRIPTION

Exemplary embodiments of the present disclosure will now be described more fully with reference to the accompanying drawings. It is to be understood that the exemplary embodiments herein are merely provided to aid the understanding of the present disclosure and are not intended to limit the present disclosure. The embodiments are provided to make the description of the present disclosure more comprehensive and complete, and to convey the concept of the exemplary embodiments to those skilled in the art. The drawings are only schematic representations of the present disclosure and are not necessarily to scale. The same reference numerals in the drawings denote the same or similar parts, and the repeated description thereof will be omitted.

Furthermore, the described features, structures, or advantages may be combined in any suitable manner in one or more embodiments. In the following description, numerous specific details are set forth to provide a full understanding of the embodiments of the present disclosure. However, one skilled in the art will recognize that one or more of the specific details may be omitted, or other equivalent methods, means, apparatuses, steps, etc. may be substituted. For the sake of brevity, structures, methods, apparatuses, implementations or operations that are well known in the art will not be described again.

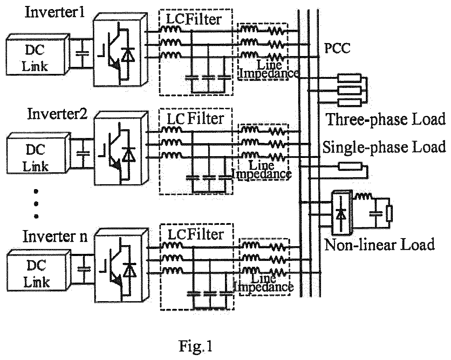

Fig. 1 illustrates topology of an exemplary islanded microgrid to which a method for evenly distributing the unbalanced and harmonic power of the present disclosure is applicable. In the islanded microgrid, n inverters 1, 2...n are included. One end of each inverter is connected to a DC bus through a parallel capacitor, and the other end is connected to a point of common coupling (PCC) through an LC filter circuit. As an example, the microgrid structure can be connected to a three phase load, a single phase load, a non-linear load, and the like.

Under normal circumstances, the microgrid operates in grid-connected mode and injects or absorbs power to or from the grid according to the control command. When the grid fails or there are other application requirements, the microgrid should be able to turn into an islanded operation state and at this time, the microgrid is required to maintain the power supply for important loads. At present, droop control is widely employed and it can realize even distribution of active power and reactive power among loads. However, it cannot realize even distribution of the unbalanced and harmonic power.

An embodiment of the method builds an unbalanced and harmonic power - small signal frequency ($Q_{UH}$-$\omega_{ss}$) droop mechanism utilizing injection of a small-signal based on the principle of active power - fundamental voltage frequency ($P$-$\omega$) droop mechanism. Taking two inverters in parallel as an example, it is assumed that the unbalanced and harmonic power $Q_{UH1}$ of the inverter 1 is greater than the unbalanced and harmonic power $Q_{UH2}$ of the inverter 2 at the beginning. According to a formula $\omega_{ss}^{*} = \omega_{ss0} + k_{ss}Q_{UH}$, the small signal frequency $\omega_{ss1}^{*}$ of the first inverter is greater than the small signal frequency $\omega_{ss2}^{*}$ of the second inverter, which causes the small signal active power $P_{ss1}$ of

the first inverter to be greater than the small signal active power $P_{ss2}$ of the second inverter. According to $L_v = L_{v0} + k_L P_{ss}$, a virtual impedance of the first inverter will be greater than a virtual impedance of the second inverter. As a result, $Q_{UH1}$ decreases and $Q_{UH2}$ increases. That is, the system adjusts $Q_{UH}$ and tends to evenly distribute $Q_{UH}$, and vice versa. Finally, the system enters a steady state, and the small signal frequency of each inverter reaches or gets close to each other. That is, the unbalanced and harmonic power in the system are evenly distributed. The principles of the present disclosure are explained below in conjunction with specific embodiments.

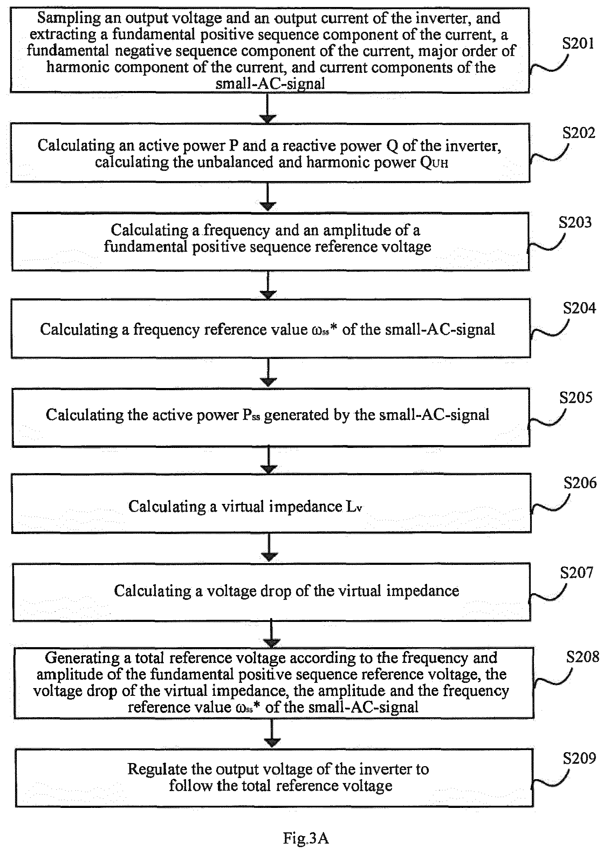

In order to solve the problem of even distribution of unbalanced and harmonic power, an embodiment of the present disclosure proposes a method for distributing unbalanced and harmonic power among a plurality of inverters connected in parallel each of which operates in an islanded state. This embodiment will be described below in conjunction with Fig. 3A.

Fig. 3A is a flow chart illustrating a method for controlling an inverter to realize even distribution of unbalanced and harmonic power according to the first embodiment of the present disclosure. In the embodiment of the present disclosure, the distribution of unbalanced and harmonic power is controlled by injecting a small alternating current signal in each inverter. It is assumed that the voltage amplitude of a given small-AC-signal is $E_{ss}{}^*$.

In step S201, the output voltage and the output current of each inverter are sampled, and a fundamental positive sequence component of the current, a fundamental negative sequence component of the current, at least one major order of harmonic component of the current, and a current component of the injected small-AC-signal are extracted according to the output current. To a certain extent, the fundamental negative sequence component of the current characterizes the magnitude of the unbalanced power, and the major order of harmonic component of the current characterizes the magnitude of the harmonic power. The major order of harmonic component may be the 3rd order harmonic, 5th order harmonic, 7th order harmonic, or any other order of harmonic according to different system. The specific major order of the harmonic may be set as needed.

In step S202, the active power $P$ and the reactive power $Q$ of the inverter are calculated according to the output voltage and the fundamental positive sequence component of the current of the inverter, and the unbalanced and harmonic power $Q_{UH}$ is calculated according to the fundamental negative sequence component of the current and the at least one major order of harmonic component of the current.

Then, in step S203, the frequency and amplitude of the fundamental positive sequence reference voltage are calculated according to the active power $P$ and the reactive power $Q$ of the inverter.

In step S204, the frequency reference value $\omega_{ss}{}^*$ of the small-AC-signal is calculated according to the unbalanced and harmonic power $Q_{UH}$.

In step S205, the active power $P_{ss}$ generated by the small-AC-signal is calculated according to the amplitude $E_{ss}{}^*$ of the small-AC-signal, the frequency reference value $\omega_{ss}{}^*$ of the small-AC-signal, and the current components of the small-AC-signal.

In step S206, a virtual impedance $L_v$ is calculated according to the active power $P_{ss}$ generated by the small-AC-signal.

In step S207, a voltage drop of the virtual impedance is calculated according to the virtual impedance $L_v$, the fundamental negative sequence component of the current, the at least one major order of harmonic component of the current, and the frequency of the fundamental positive sequence reference voltage.

In step S208, a total reference voltage is generated according to the frequency and amplitude of the fundamental positive sequence reference voltage, the voltage drop of the virtual impedance, the amplitude of the small-AC-signal, and the frequency reference value $\omega_{ss}{}^*$ of the small-AC-signal.

Finally, in step S209, the output voltage of the inverter is regulated to follow the total reference voltage, so as to adjust the output voltage.

The above even-distribution control method is for the situation where both unbalanced power and harmonic power are present. The details will be described below with reference to exemplary embodiments. It should be understood that the details of the embodiments are intended to assist those skilled in the art to understand the present disclosure and not to limit the present disclosure. The steps in the embodiments of the present disclosure may be performed in a different order or omitted unless otherwise specified.

The present embodiment is an example of method for controlling an inverter to realize even distribution of unbalanced and harmonic power. For the sake of clarity and conciseness, a three-phase load is taken as an example in this embodiment, and the output of the inverter is a three-phase currents and a three-phase voltage. It should be understood that the load of the present disclosure may also be a single phase load, a non-linear load, etc., the principles of which are the same.

In step S201, the output voltage and output current of each inverter are sampled. Firstly, the three-phase voltages $v_a$, $v_b$, and $v_c$ of the output voltage of the inverter and the three-phase currents $i_a$, $i_b$, and $i_c$ of the output current of the inverter are sampled. In an embodiment, the voltages and currents can be further transformed into a two-phase stationary $\alpha\beta$ coordinate system through a Clarke transformation matrix, to obtain components $v_\alpha$ and $v_\beta$ of the three-

phase voltages in the two-phase stationary $\alpha\beta$ coordinate system and components $i_\alpha$ and $i_\beta$ of the three-phase currents in the two-phase stationary $\alpha\beta$ coordinate system. However, the present disclosure is not limited thereto.

The step S201 further includes extracting a fundamental positive sequence component of the current, a fundamental negative sequence component of the current, at least one major order of harmonic component of the current, and a current component of the injected small-AC-signal according to the output current. Specifically, for example, according to the components $i_\alpha$ and $i_\beta$ of the three-phase currents in the two-phase stationary $\alpha\beta$ coordinate system, the fundamental positive sequence components $i_{1\alpha}{}^+$ and $i_{1\beta}{}^+$ of the current and the fundamental negative sequence components $i_{1\alpha}{}^-$ and $i_{1\beta}{}^-$ of the current, the major order of harmonic components $i_{h\alpha}$ and $i_{h\beta}$ of the current and the current components $i_{ss\alpha}{}^+$ and $i_{ss\beta}{}^+$ of the small-AC-signal in the two-phase stationary $\alpha\beta$ coordinate system are extracted.

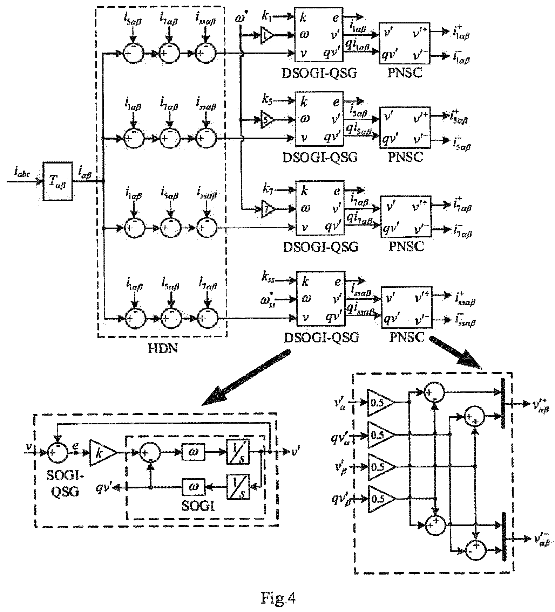

Fig. 4 is a schematic diagram illustrating signal extraction in accordance with one embodiment of the present disclosure. As shown in Fig. 4, the sampled current signals $i_a$, $i_b$ and $i_c$ (denoted as $i_{abc}$ in the figure for simplicity) are transformed into a two-phase stationary $\alpha\beta$ coordinate system through the Clarke transformation matrix $T_{\alpha\beta}$, resulting in components $i_\alpha$ and $i_\beta$ (represented by $i_{\alpha\beta}$ in the figure for the sake of simplicity) of the three-phase currents in the two-phase $\alpha\beta$ coordinate system. According to the components $i_\alpha$ and $i_\beta$ of the three-phase currents in the two-phase stationary $\alpha\beta$ coordinate system, the fundamental positive sequence components $i_{1\alpha}{}^+$ and $i_{1\beta}{}^+$ of the current and the fundamental negative sequence components $i_{1\alpha}{}^-$ and $i_{1\beta}{}^-$ of the current, the major order of harmonic components $i_{h\alpha}$ and $i_{h\beta}$ of the current and the current components $i_{ss\alpha}{}^+$ and $i_{ss\beta}{}^+$ of the small-AC-signal in the two-phase stationary $\alpha\beta$ coordinate system are extracted.

It can be seen that in Fig. 4, the major orders of harmonics are the 5th harmonic and the 7th harmonic, for example, but the present disclosure is not limited thereto, and the harmonic order corresponding to the harmonic power desired to be evenly distributed may be taken as the major order of harmonic, for example, may be other odd or even order of harmonics, and the number of corresponding major orders of harmonics may also be one or more. The so-called major order of harmonic is only used for index, not for importance. The following embodiments are similar and will not be described again.

In Fig. 4, the fundamental positive sequence components $i_{1\alpha}{}^+$ and $i_{1\beta}{}^+$ of the current and the fundamental negative sequence components $i_{1\alpha}{}^-$ and $i_{1\beta}{}^-$ of the current, the major order of harmonic components $i_{5\alpha}{}^-$, $i_{5\beta}{}^-$, $i_{7\alpha}{}^-$, $i_{7\beta}{}^-$, $i_{5\alpha}{}^+$, $i_{5\beta}{}^+$, $i_{7\alpha}{}^+$ and $i_{7\beta}{}^+$ of the current and the current components $i_{ss\alpha}{}^+$ and $i_{ss\beta}{}^+$, $i_{ss\alpha}{}^-$ and $i_{ss\beta}{}^-$ of the small-AC-signal in the two-phase stationary $\alpha\beta$ coordinate system are extracted.

In addition, the SOGI-QSG (Second Order Generalized Integrator-Quadrature Signal Generator) shown in Fig. 4 is a quadrature signal generator according to a second-order generalized integrator, and DSOGI-QSG is a dual SOGI-QSG. The PNSC (Positive and Negative Sequence Calculator) is a positive and negative sequence component calculator. The method for extracting various current components is not limited to the two-phase stationary $\alpha\beta$ coordinate system, and other methods for extracting components are applicable. For example, it can also be extracted in a three-phase coordinate system, and the present disclosure is not limited thereto.

Referring to Fig. 3A, in step S202, in order to calculate the active power $P$ and the reactive power $Q$ of the inverter, and calculate the unbalanced and harmonic power $Q_{UH}$, in one embodiment, the active power $P$ and the reactive power $Q$ can be calculated from the output voltages $v_\alpha$ and $v_\beta$ in the two-phase stationary $\alpha\beta$ coordinate system and the fundamental positive sequence components $i_{1\alpha}{}^+$ and $i_{1\beta}{}^+$ of the current in the two-phase stationary $\alpha\beta$ coordinate system with the following formula:

$$P = \frac{3}{2(\tau s + 1)} \left( v_\alpha i_{1\alpha}^+ + v_\beta i_{1\beta}^+ \right) \qquad (1)$$

$$Q = \frac{3}{2(\tau s + 1)} \left( v_\beta i_{1\alpha}^+ - v_\alpha i_{1\beta}^+ \right) \qquad (2)$$

Where $\tau$ represents the time constant of a low pass filter.

Then, the unbalanced and harmonic power $Q_{UH}$ is calculated from the fundamental negative sequence components $i_{1\alpha}{}^-$ and $i_{1\beta}{}^-$ of the current and the major order of harmonic components $i_{h\alpha}$ and $i_{h\beta}$ of the current in the two-phase stationary $\alpha\beta$ coordinate system with the following formula:

$$Q_{UH} = \frac{3}{2} E^* \sqrt{\left( i_{1\alpha}^- \right)^2 + \left( i_{1\beta}^- \right)^2 + \sum_h \left[ \left( i_{h\alpha} \right)^2 + \left( i_{h\beta} \right)^2 \right]} \qquad (3)$$

Where $E^*$ represents the amplitude of the fundamental positive sequence reference voltage and h represents a harmonic order of the at least one major order of harmonic component of the current. The method for calculating the relevant power value is not limited to the two-phase stationary $\alpha\beta$ coordinate system, and other calculation methods are applicable, for example, calculation in a three-phase coordinate system, etc., and the present disclosure is not limited thereto.

Next, in step S203. According to the active power $P$ and the reactive power $Q$ of the inverter calculated as described above, the frequency $\omega^*$ of the fundamental positive sequence reference voltage and the amplitude $E^*$ of the fundamental positive sequence reference voltage are calculated with the following formula:

$$\omega^* = \omega_0 - k_p(P - P_0) \qquad (4)$$

$$E^* = E_0 - k_q(Q - Q_0) \qquad (5)$$

Where $P_0$ and $Q_0$ are the rated values of the active power and reactive power of the inverter, respectively, $\omega_0$ and $E_0$ are the rated frequency and rated voltage of the inverter, respectively, and $k_p$ and $k_q$ are the first and second droop coefficients, respectively, both of which are positive values.

Step S204. In this step, according to the unbalanced and harmonic power $Q_{UH}$ calculated in step S202, the frequency reference value $\omega_{ss}^*$ of the small-AC-signal is calculated with the following formula:

$$\omega_{ss}^* = \omega_{ss0} + k_{ss}Q_{UH} \qquad (6)$$

Where $\omega_{ss0}$ is the frequency benchmark value of the small-AC-signal and $k_{ss}$ represents the third droop coefficient. The frequency benchmark value $\omega_{ss0}$ of the small-AC-signal is different from the frequencies of the fundamental positive sequence component of the current, the fundamental negative sequence component of the current, and the major order of harmonic component of the current. $\omega_{ss0}$ can be selected according to the actual operation conditions. When selecting the small signal frequency, it is preferred to avoid the fundamental frequency and the major order of harmonic frequency existing in the system within the control bandwidth of the system. For example, $\omega_{ss0}$ can be considered to be 200 Hz or 400 Hz, etc.in a 50 Hz grid system. And, as another example, $\omega_{ss0}$ can be considered to be 240 Hz or 480 Hz in a 60 Hz power grid system. However, the present disclosure is not limited thereto.

In this embodiment, further, n inverters may be included in the microgrid, and n is a positive integer. When the capacities $S_1, S_2...S_n$ of the respective inverters 1, 2, ... n are the same, the third droop coefficient of each inverter can be the same. When the capacities of respective inverters $S_1, S_2...S_n$ are different, they can be designed according to the following formula:

$$k_{ss1}S_1 = k_{ss2}S_2 = \cdots = k_{ssn}S_n \qquad (7)$$

Where $k_{ss1},..k_{ssn}$ represent the third droop coefficients of the inverters 1, 2...n, respectively.

In step S205, the active power $P_{ss}$ of the small-AC-signal is calculated according to the amplitude $E_{ss}^*$ of the small-AC-signal, the frequency reference value $\omega_{ss}^*$ of the small-AC-signal, and the current components $i_{ss\alpha}^+$ and $i_{ss\beta}^+$ of the small-AC-signal in the two-phase stationary $\alpha\beta$ coordinate system.

In this step S205, the small-AC-signal reference voltages $v^*_{ss\alpha}$ and $v^*_{ss\beta}$ in the two-phase stationary $\alpha\beta$ coordinate system can be calculated according to the amplitude $E_{ss}^*$ of the small-AC-signal and the frequency reference value $\omega_{ss}^*$ of the small-AC-signal with the following formula:

$$v_{ss\alpha}^* = E_{ss}^* \cos\left(\omega_{ss}^* t\right) \qquad (8)$$

$$v_{ss\beta}^* = E_{ss}^* \sin\left(\omega_{ss}^* t\right) \qquad (9)$$

Where t represents the time.

Then, according to the small-AC-signal reference voltages $v^*_{ss\alpha}$ and $v^*_{ss\beta}$ in the two-phase stationary $\alpha\beta$ coordinate system and the current components $i_{ss\alpha}{}^+$ and $i_{ss\beta}{}^+$ of the small-AC-signal, the active power $P_{ss}$ generated by the small-AC-signal is calculated with the following formula:

$$P_{ss} = \frac{3}{2(\tau s + 1)}\left(v^*_{ss\alpha}i^+_{ss\alpha} + v^*_{ss\beta}i^+_{ss\beta}\right) \qquad (10)$$

Where $\tau$ represents the time constant of the low pass filter. The method for calculating the active power generated by the small-AC-signal is not limited to the two-phase stationary $\alpha\beta$ coordinate system, and other calculation methods are applicable, for example, calculation in a three-phase coordinate system, etc., and the present disclosure is not limited thereto.

Although the flow chart of the steps S203, S204, S205 and the like in Fig. 3A are connected by arrows, the direction of the arrows does not necessarily represent the order in which the steps are performed. For example, the above steps S203, S204, S205, etc. may also be simultaneously performed or in another order. The present disclosure is not limited thereto.

Next, in step S206, according to the active power $P_{ss}$ of the small-AC-signal, the virtual impedance $L_v$ is calculated with the following formula:

$$L_v = L_{v0} + k_L P_{ss} \qquad (11)$$

Where $L_{v0}$ represents the reference value of the virtual impedance and $k_L$ represents the fourth droop coefficient.

Next, with continued reference to Fig. 3A and step S207. In this step, the fundamental negative sequence component of the voltage drop of the virtual impedance can be calculated according to the virtual impedance $L_v$, the fundamental negative sequence component of the current and the frequency of the fundamental positive sequence reference voltage. The major order of harmonic component of the voltage drop of the virtual impedance can be calculated according to the virtual impedance $L_v$, the major order of harmonic component of the current and the frequency of the fundamental positive sequence reference voltage. Finally, the voltage drop of the virtual impedance can be calculated according to the voltage drop of the negative impedance component of the virtual impedance and the voltage drop of the major order of harmonic component of the virtual impedance.

Next, in step S208, a total reference voltage is generated. The total reference voltage $V_{\alpha\beta\_ref}$ may be generated according to the frequency and amplitude of the fundamental positive sequence reference voltage, the voltage drop of the virtual impedance, the amplitude of the small-AC-signal, and the frequency reference value $\omega_{ss}{}^*$ of the small-AC-signal.

Finally, in step S209, the output voltage of the inverter is regulated to follow the total reference voltage, so as to adjust the output voltage.

In this embodiment, as an example, the amplitude $E^*_{ss}$ of the small-AC-signal may be equal to or less than 3V, or may be about 1% of the amplitude of the fundamental voltage, for example, 1V, but is not limited thereto. In addition, the number of at least one major order of harmonic component of the current may be plural. The at least one major order of harmonic component of the current includes a first major order of harmonic component of the current and a second major order of harmonic component of the current, and the unbalanced and harmonic power $Q_{UH}$ is calculated according to the fundamental negative sequence component of the current, the first major order of harmonic component of the current, and the second major order of harmonic component of the current. For example, the first major order of harmonic component of the current and the second major order of harmonic component of the current may be one of a 5th harmonic component, a 7th harmonic component and an 11th harmonic component, respectively, but the present disclosure is not limited thereto.

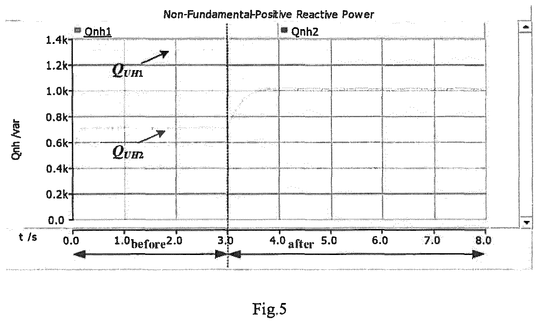

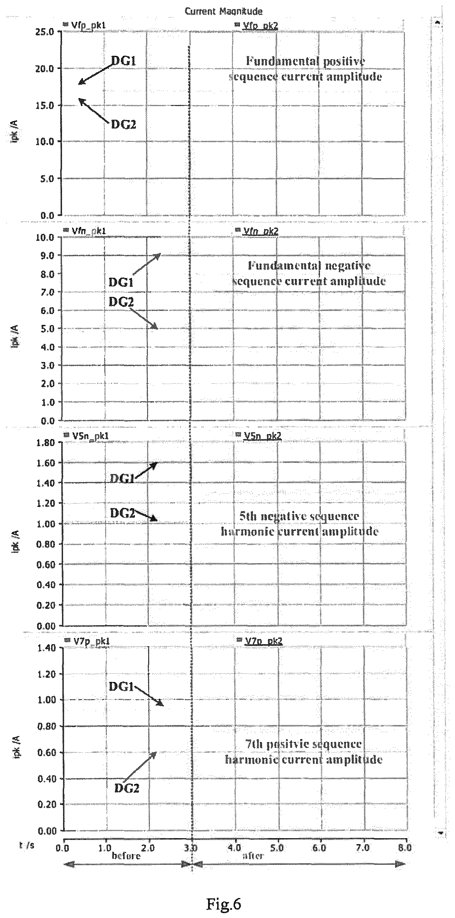

Figs. 5 and 6 show simulation results based on PSCAD (Power Systems Computer Aided Design). The simulation results show the comparison before and after the control method of the present disclosure. It can be clearly seen that after the control method of the embodiment of the present disclosure, the unbalanced and harmonic power is evenly distributed between the two inverters. In addition, the various orders of harmonic currents and the fundamental negative sequence current are also evenly distributed, and the PCC voltage quality is basically unaffected and meets the voltage quality requirements. The method according to the embodiment of the present disclosure can to a large extent realize even distribution of unbalance and harmonic power, and the effect is significant.

Another embodiment is different from the application scenario of the first embodiment. The first embodiment can be applied when both unbalanced power and harmonic power are present; and in the case where there is no harmonic power or no harmonic power required to be evenly distributed, the second embodiment provides an exemplary method for distributing unbalanced power among a plurality of inverters connected in parallel.

For the sake of clarity and conciseness, in this embodiment, a three-phase load is taken as an example for description, and the inverter outputs three-phase currents and three-phase voltage. It should be understood that the load of the present disclosure may also be a single phase load, a non-linear load, or the like.

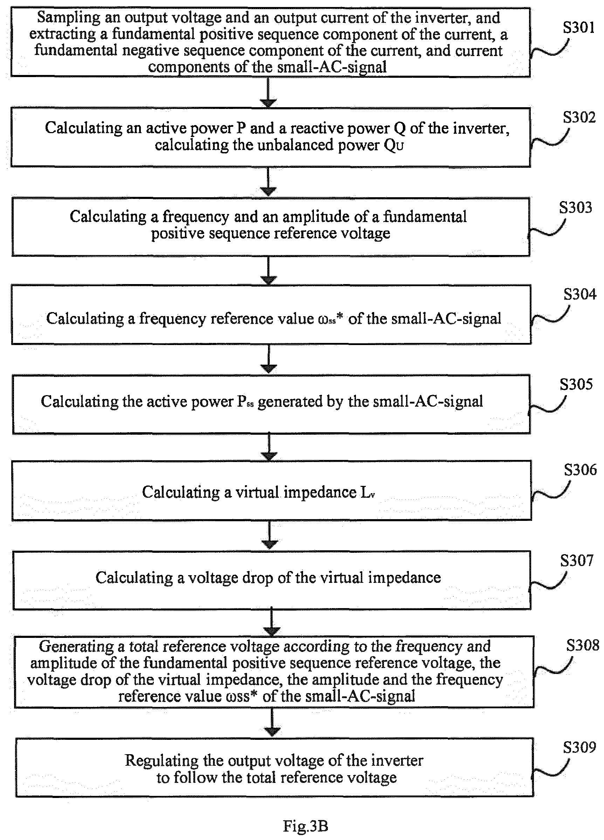

Fig. 3B is a flow chart illustrating a method for controlling an inverter to realize even distribution of unbalanced power according to a second embodiment of the present disclosure. The embodiment will be described below with reference to the drawings. It is to be understood that the details of the embodiments are intended to assist those skilled in the art to understand the present disclosure and not to limit the present disclosure. The steps in the embodiments of the present disclosure may be performed in a different order or omitted unless otherwise specified.

When a plurality of inverters as shown in Fig. 1 are in an islanded operation state, similarly to the first embodiment, the distribution of unbalanced power is controlled by separately injecting an small-AC-signal in each inverter. It is assumed that the voltage amplitude of a given small-AC-signal is $E_{ss}^*$.

Referring now to Fig. 3B, in step S301, the output voltage and the output current of each inverter are sampled, and a fundamental positive sequence component of the current, a fundamental negative sequence component of the current, and current components of the small-AC-signal are extracted from the output current. To a certain extent, the fundamental negative sequence component of the current characterizes the magnitude of the unbalanced power, and the major order of harmonic component of the current characterizes the magnitude of the harmonic power. In this embodiment, even distribution of the harmonic power may not be considered, so that the major order of harmonic component of the current may not be extracted.

In step S302, the active power $P$ and the reactive power $Q$ of the inverter are calculated according to the output voltage and the fundamental positive sequence component of the current of the inverter, and the unbalanced power $Q_U$ is calculated according to the fundamental negative sequence component of the current.

In step S303, the frequency and amplitude of the fundamental positive sequence reference voltage are calculated according to the active power $P$ and the reactive power $Q$ of the inverter.

In step S304, the frequency reference value $\omega_{ss}^*$ of the small-AC-signal is calculated according to the unbalanced power $Q_U$.

In step S305, the active power $P_{ss}$ generated by the small-AC-signal is calculated according to the amplitude $E_{ss}^*$ of the small-AC-signal, the frequency reference value $\omega_{ss}^*$ of the small-AC-signal, and the current components of the small-AC-signal.

In step S306, a virtual impedance $L_v$ is calculated according to the active power $P_{ss}$ generated by the small-AC-signal.

In step S307, a voltage drop of the virtual impedance is calculated according to the virtual impedance $L_v$, the fundamental negative sequence component of the current, and the frequency of the fundamental positive sequence reference voltage.

In step S308, a total reference voltage is generated according to the frequency and amplitude of the fundamental positive sequence reference voltage, the voltage drop of the virtual impedance, the amplitude of the small-AC-signal, and the frequency reference value $\omega_{ss}^*$ of the small-AC-signal.

In step S309, the output voltage of the inverter is regulated to follow the total reference voltage.

The second embodiment is an example of method for controlling an inverter to realize even distribution of unbalanced power. For the sake of clarity and conciseness, a three-phase load is taken as an example in this embodiment, and the output of the inverter is a three-phase currents and a three-phase voltage. It should be understood that the load of the present disclosure may also be a single phase load, a non-linear load, etc. In step S301, the three-phase voltages $v_a$, $v_b$, and $v_c$ of the output voltage of the inverter, and the three-phase currents $i_a$, $i_b$, and $i_c$ of the output current of the inverter are sampled. Further, for example, the voltages and currents can be transformed into a two-phase stationary $\alpha\beta$ coordinate system through a Clarke transformation matrix, to obtain components $v_\alpha$ and $v_\beta$ of the three-phase voltages in the two-phase stationary $\alpha\beta$ coordinate system and components $i_\alpha$ and $i_\beta$ of the three-phase currents in the two-phase stationary $\alpha\beta$ coordinate system.

The step S301 may further include, according to the components $i_\alpha$ and $i_\beta$ of the three-phase currents in the two-phase stationary $\alpha\beta$ coordinate system, the fundamental positive sequence components $i_{1\alpha}^+$ and $i_{1\beta}^+$ of the current and the fundamental negative sequence components $i_{1\alpha}^-$ and $i_{1\beta}^-$ of the current, and the current components $i_{ss\alpha}^+$ and $i_{ss\beta}^+$ of the small-AC-signal in the two-phase stationary $\alpha\beta$ coordinate system are extracted.

The schematic diagram of the signal extraction can be referred to Fig. 4, which has been described in detail in the foregoing first embodiment, and details are not described herein again. The method for extracting various current components is not limited to the two-phase stationary $\alpha\beta$ coordinate system, and other methods for extracting components are applicable. For example, it can also be extracted in a three-phase coordinate system, and the present disclosure is not limited thereto.

Reference is continued to Fig. 3B, step S302. The active power $P$ and the reactive power $Q$ can be calculated from the output voltages $v_\alpha$ and $v_\beta$ in the two-phase stationary $\alpha\beta$ coordinate system and the fundamental positive sequence components $i_{1\alpha}^+$ and $i_{1\beta}^+$ of the current in the two-phase stationary $\alpha\beta$ coordinate system with the following formula:

$$P = \frac{3}{2(\tau s + 1)}\left(v_\alpha i_{1\alpha}^+ + v_\beta i_{1\beta}^+\right) \qquad (12)$$

$$Q = \frac{3}{2(\tau s + 1)}\left(v_\beta i_{1\alpha}^+ - v_\alpha i_{1\beta}^+\right) \qquad (13)$$

Where $\tau$ represents the time constant of a low pass filter. The method for calculating the power is not limited to the two-phase stationary $\alpha\beta$ coordinate system, and other calculation methods are applicable, for example, calculation in a three-phase coordinate system, etc., and the present disclosure is not limited thereto.

The unbalanced power $Q_U$ can be calculated from the fundamental negative sequence components $i_{1\alpha}^-$ and $i_{1\beta}^-$ of the current in the two-phase stationary $\alpha\beta$ coordinate system with the following formula:

$$Q_U = \frac{3}{2}E^*\sqrt{\left(i_{1\alpha}^-\right)^2 + \left(i_{1\beta}^-\right)^2} \qquad (14)$$

Where $E^*$ represents the amplitude of the fundamental positive sequence reference voltage.

Next, step S303. According to the active power $P$ and the reactive power $Q$ of the inverter calculated as described above, the frequency $\omega^*$ of the fundamental positive sequence reference voltage and the amplitude $E^*$ of the fundamental positive sequence reference voltage are calculated with the following formula:

$$\omega^* = \omega_0 - k_p(P - P_0) \qquad (15)$$

$$E^* = E_0 - k_q(Q - Q_0) \qquad (16)$$

Where $P_0$ and $Q_0$ are the rated values of the active power and reactive power of the inverter, respectively, $\omega_0$ and $E_0$ are the rated frequency and rated voltage of the inverter, respectively, and $k_p$ and $k_q$ are the first and second droop coefficients, respectively, both of which are positive values.

Step S304. In this step, according to the calculated unbalanced power $Q_U$, the frequency reference value $\omega_{ss}^*$ of the small-AC-signal is calculated with the following formula:

$$\omega_{ss}^* = \omega_{ss0} + k_{ss}Q_U \qquad (17)$$

Where $\omega_{ss0}$ is the frequency benchmark value of the small-AC-signal and $k_{ss}$ represents the third droop coefficient. The frequency benchmark value $\omega_{ss0}$ of the small-AC-signal is different from the frequencies of the fundamental positive sequence component of the current, and the fundamental negative sequence component of the current.

In this embodiment, n inverters may be included in the microgrid, and n is a positive integer. When the capacities $S_1, S_2 ... S_n$ of the respective inverters 1, 2, ... n are the same, the third droop coefficient of each inverter can be the same. When the capacities of respective inverters $S_1, S_2 ... S_n$ are different, they can be designed according to the following formula:

$$k_{ss1}S_1 = k_{ss2}S_2 = \cdots = k_{ssn}S_n \qquad (18)$$

Where $k_{ss1}, .. k_{ssn}$ represent the third droop coefficients of the inverters 1, 2...n, respectively.

In step S305, the active power $P_{ss}$ of the small-AC-signal is calculated according to the amplitude $E_{ss}^*$ of the small-AC-signal, the frequency reference value $\omega_{ss}^*$ of the small-AC-signal, and the current components $i_{ss\alpha}^+$ and $i_{ss\beta}^+$ of the small-AC-signal in the two-phase stationary $\alpha\beta$ coordinate system.

In this step, the small-AC-signal reference voltages $v^*_{ss\alpha}$ and $v^*_{ss\beta}$ in the two-phase stationary $\alpha\beta$ coordinate system can be calculated according to the amplitude $E_{ss}^*$ of the small-AC-signal and the frequency reference value $\omega_{ss}^*$ of the small-AC-signal with the following formula:

$$v^*_{ss\alpha} = E^*_{ss}\cos\left(\omega^*_{ss}t\right) \qquad (19)$$

$$v^*_{ss\beta} = E^*_{ss}\sin\left(\omega^*_{ss}t\right) \qquad (20)$$

Where t represents the time.

According to the small-AC-signal reference voltages $v^*_{ss\alpha}$ and $v^*_{ss\beta}$ in the two-phase stationary $\alpha\beta$ coordinate system and the current components $i_{ss\alpha}^+$ and $i_{ss\beta}^+$ of the small-AC-signal, the active power $P_{ss}$ generated by the small-AC-signal is calculated with the following formula:

$$P_{ss} = \frac{3}{2(\tau s + 1)}\left(v^*_{ss\alpha}i^+_{ss\alpha} + v^*_{ss\beta}i^+_{ss\beta}\right) \qquad (21)$$

Where $\tau$ represents the time constant of the low pass filter.

The method for calculating the active power generated by the small-AC-signal is not limited to the two-phase stationary $\alpha\beta$ coordinate system, and other calculation methods are applicable, for example, calculation in a three-phase coordinate system, etc., and the present disclosure is not limited thereto.

Although the flow chart of the steps S303, S304, S305 and the like in Fig. 3B are connected by arrows, the direction of the arrows does not necessarily represent the order in which the steps are performed. For example, the above steps S303, S304, S305, etc. may also be simultaneously performed or in another order. The present disclosure is not limited thereto.

Next, in step S306, according to the active power $P_{ss}$ of the small-AC-signal, the virtual impedance $L_v$ is calculated with the following formula:

$$L_v = L_{v0} + k_L P_{ss} \qquad (22)$$

Where $L_{v0}$ represents the reference value of the virtual impedance and $k_L$ represents the fourth droop coefficient.

Next, with continued reference to Fig. 3B, step S307. In this step, firstly, the fundamental negative sequence component of the voltage drop of the virtual impedance can be calculated according to the virtual impedance $L_v$, the fundamental negative sequence component of the current and the frequency of the fundamental positive sequence reference voltage. Then, the voltage drop of the virtual impedance can be calculated according to the voltage drop of the negative impedance component of the virtual impedance.

Next, in step S308, a total reference voltage is generated.

Finally, in step S309, the output voltage of the inverter is regulated to follow the total reference voltage, so as to adjust the output voltage.

In this embodiment, as an example, the amplitude $E^*_{ss}$ of the small-AC-signal may be equal to or less than 3V, but the present disclosure is not limited thereto.

Now another embodiment that is different from the application scenarios of the first and second embodiments. The first embodiment can be applied when both unbalanced power and harmonic power are present; in the case where there is no harmonic power or harmonic power is not required to be evenly distributed, the second embodiment can be applied; and in the case where there is no unbalanced power or unbalanced power is not required to be evenly distributed, and the present embodiment provides an exemplary method for distributing harmonic power among a plurality of inverters connected in parallel.

For the sake of clarity and conciseness, in this embodiment, a three-phase load is taken as an example for description, and the inverter outputs three-phase currents and three-phase voltage. It should be understood that the load of the present disclosure may also be a single phase load, a non-linear load, or the like.

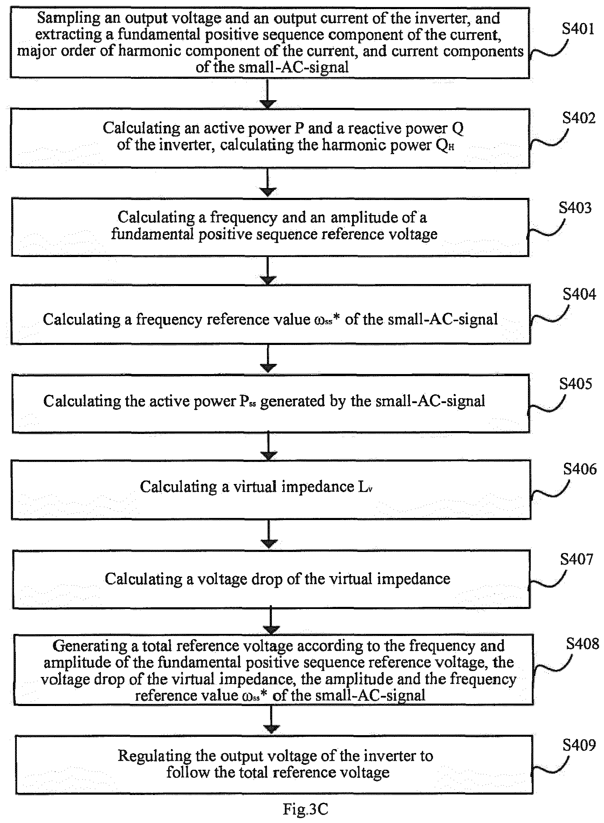

Fig. 3C is a flow chart illustrating a method for controlling an inverter to realize even distribution of harmonic power according to a third embodiment of the present disclosure. The embodiment will be described below with reference to the drawings. It is to be understood that the details of the embodiments are intended to assist those skilled in the art to understand the present disclosure and not to limit the present disclosure. The steps in the embodiments of the present disclosure may be performed in a different order or omitted unless otherwise specified.

When a plurality of inverters as shown in Fig. 1 are in an islanded operation state, similarly to the first embodiment, the distribution of unbalanced power is controlled by separately injecting an small-AC-signal in each inverter. It is assumed that the voltage amplitude of a given small-AC-signal is $E_{ss}^*$.

Referring now to Fig. 3C, in step S401, the output voltage and the output current of each inverter are sampled, and a fundamental positive sequence component of the current, at least one major order of harmonic component of the current, and current components of the small-AC-signal are extracted from the output current.

In step S402, the active power $P$ and the reactive power $Q$ of the inverter are calculated according to the output voltage and the fundamental positive sequence component of the current of the inverter, and the harmonic power $Q_H$ is calculated according to the at least one major order of harmonic component of the current. To a certain extent, the fundamental negative sequence component of the current characterizes the magnitude of the unbalanced power, and the major order of harmonic component of the current characterizes the magnitude of the harmonic power. In this embodiment, even distribution of the unbalanced power may not be considered, so that the fundamental negative sequence component of the current may not be extracted.

In step S403, the frequency and amplitude of the fundamental positive sequence reference voltage are calculated according to the active power $P$ and the reactive power $Q$ of the inverter.

In step S404, the frequency reference value $\omega_{ss}^*$ of the small-AC-signal is calculated according to the harmonic power $Q_H$.

In step S405, the active power $P_{ss}$ generated by the small-AC-signal is calculated according to the amplitude $E_{ss}^*$ of the small-AC-signal, the frequency reference value $\omega_{ss}^*$ of the small-AC-signal, and the current components of the small-AC-signal.

In step S406, a virtual impedance $L_v$ is calculated according to the active power $P_{ss}$ generated by the small-AC-signal.

In step S407, a voltage drop of the virtual impedance is calculated according to the virtual impedance $L_v$, the at least one major order of harmonic component of the current, and the frequency of the fundamental positive sequence reference voltage.

In step S408, a total reference voltage is generated according to the frequency and amplitude of the fundamental positive sequence reference voltage, the voltage drop of the virtual impedance, the amplitude of the small-AC-signal, and the frequency reference value $\omega_{ss}^*$ of the small-AC-signal.

In step S409, the output voltage of the inverter is regulated to follow the total reference voltage.

The third embodiment is an example of method for controlling an inverter to realize even distribution of unbalanced and harmonic power. For the sake of clarity and conciseness, a three-phase load is taken as an example in this embodiment, and the output of the inverter is a three-phase currents and a three-phase voltage. It should be understood that the load of the present disclosure may also be a single phase load, a non-linear load, etc.

In step S401, the three-phase voltages $v_a$, $v_b$, and $v_c$ of the output voltage of the inverter and the three-phase currents $i_a$, $i_b$, and $i_c$ of the output current of the inverter are sampled. The voltages and currents can be further transformed into a two-phase stationary $\alpha\beta$ coordinate system through a Clarke transformation matrix, to obtain components $v_\alpha$ and $v_\beta$ of the three-phase voltages in the two-phase stationary $\alpha\beta$ coordinate system and components $i_\alpha$ and $i_\beta$ of the three-phase currents in the two-phase stationary $\alpha\beta$ coordinate system.

The step S401 may further include, according to the components $i_\alpha$ and $i_\beta$ of the three-phase currents in the two-phase stationary $\alpha\beta$ coordinate system, the fundamental positive sequence components $i_{1\alpha}^+$ and $i_{1\beta}^+$ of the current and the major order of harmonic components $i_{h\alpha}$ and $i_{h\beta}$ of the current and the current components $i_{ss\alpha}^+$ and $i_{ss\beta}^+$ of the small-AC-signal in the two-phase stationary $\alpha\beta$ coordinate system are extracted.

The schematic diagram of the signal extraction can be referred to Fig. 4, which has been described in detail in the foregoing first embodiment, and details are not described herein again. The method for extracting various components of the current is not limited to the two-phase stationary $\alpha\beta$ coordinate system, and other methods for extracting components are applicable, for example, it can also be extracted in a three-phase coordinate system, and the present disclosure is not limited thereto.

Reference is continued to Figure 3C. The step S402 may further include, calculating the active power P and the reactive power Q from the output voltages $v_\alpha$ and $v_\beta$ in the two-phase stationary $\alpha\beta$ coordinate system and the fundamental positive sequence components $i_{1\alpha}^+$ and $i_{1\beta}^+$ of the current in the two-phase stationary $\alpha\beta$ coordinate system with the following formula:

$$P = \frac{3}{2(\tau s + 1)} \left( v_\alpha i_{1\alpha}^{+} + v_\beta i_{1\beta}^{+} \right) \qquad (23)$$

$$Q = \frac{3}{2(\tau s + 1)} \left( v_\beta i_{1\alpha}^{+} - v_\alpha i_{1\beta}^{+} \right) \qquad (24)$$

Where $\tau$ represents the time constant of a low pass filter. The method for calculating the power is not limited to the two-phase stationary $\alpha\beta$ coordinate system, and other calculation methods are applicable. For example, the calculation may be performed in a three-phase coordinate system, and the present disclosure is not limited thereto.

Then, the harmonic power $Q_H$ is calculated from the major order of harmonic components $i_{h\alpha}$ and $i_{h\beta}$ of the current in the two-phase stationary $\alpha\beta$ coordinate system with the following formula:

$$Q_H = \frac{3}{2} E^* \sqrt{\sum_h \left[ \left( i_{h\alpha} \right)^2 + \left( i_{h\beta} \right)^2 \right]} \qquad (25)$$

Where $E^*$ represents the amplitude of the fundamental positive sequence reference voltage and h represents the harmonic order of the at least one major order of harmonic component of the current.

Next, in step S403, according to the active power $P$ and the reactive power $Q$ of the inverter calculated as described above, the frequency $\omega^*$ of the fundamental positive sequence reference voltage and the amplitude $E^*$ of the fundamental positive sequence reference voltage are calculated with the following formula:

$$\omega^* = \omega_0 - k_p (P - P_0) \qquad (26)$$

$$E^* = E_0 - k_q (Q - Q_0) \qquad (27)$$

Where $P_0$ and $Q_0$ are the rated values of the active power and reactive power of the inverter, respectively, $\omega_0$ and $E_0$ are the rated frequency and rated voltage of the inverter, respectively, and $k_p$ and $k_q$ are the first and second droop coefficients, respectively, both of which are positive values.

Step S404. In this step, according to the calculated harmonic power $Q_H$, the frequency reference value $\omega_{ss}^*$ of the small-AC-signal is calculated with the following formula:

$$\omega_{ss}^* = \omega_{ss0} + k_{ss} Q_H \qquad (28)$$

Where $\omega_{ss0}$ is the frequency benchmark value of the small-AC-signal and $k_{ss}$ represents the third droop coefficient. The frequency benchmark value $\omega_{ss0}$ of the small-AC-signal is different from the frequencies of the fundamental positive sequence component of the current and the major order of harmonic component of the current.

In this embodiment, n inverters may be included in the microgrid, and n is a positive integer. When the capacities $S_1, S_2 ... S_n$ of the respective inverters 1, 2, ... n are the same, the third droop coefficient of each inverter can be the same. When the capacities of respective inverters $S_1, S_2 ... S_n$ are different, they can be designed according to the following formula:

$$k_{ss1} S_1 = k_{ss2} S_2 = \cdots = k_{ssn} S_n \qquad (29)$$

Where $k_{ss1},..k_{ssn}$ represent the third droop coefficients of the inverters 1, 2...n, respectively.

In step S405, the active power $P_{ss}$ of the small-AC-signal is calculated according to the amplitude $E_{ss}^*$ of the small-AC-signal, the frequency reference value $\omega_{ss}^*$ of the small-AC-signal, and the current components $i_{ss\alpha}^{+}$ and $i_{ss\beta}^{+}$ of the small-AC-signal in the two-phase stationary $\alpha\beta$ coordinate system.

In this step, firstly, the small-AC-signal reference voltages $v^*_{ss\alpha}$ and $v^*_{ss\beta}$ in the two-phase stationary $\alpha\beta$ coordinate system can be calculated according to the amplitude $E_{ss}^*$ of the small-AC-signal and the frequency reference value $\omega_{ss}^*$ of the small-AC-signal with the following formula:

$$v^*_{ss\alpha} = E^*_{ss} \cos\left(\omega^*_{ss}t\right) \qquad (30)$$

$$v^*_{ss\beta} = E^*_{ss} \sin\left(\omega^*_{ss}t\right) \qquad (31)$$

Where t represents the time.

Then, according to the small-AC-signal reference voltages $v^*_{ss\alpha}$ and $v^*_{ss\beta}$ in the two-phase stationary $\alpha\beta$ coordinate system and the current components $i_{ss\alpha}^+$ and $i_{ss\beta}^+$ of the small-AC-signal, the active power $P_{ss}$ generated by the small-AC-signal is calculated with the following formula:

$$P_{ss} = \frac{3}{2(\tau s + 1)}\left(v^*_{ss\alpha}i^+_{ss\alpha} + v^*_{ss\beta}i^+_{ss\beta}\right) \qquad (32)$$

Where $\tau$ represents the time constant of the low pass filter. The method for calculating the active power generated by the small-AC-signal is not limited to the two-phase stationary $\alpha\beta$ coordinate system, and other calculation methods are applicable, for example, calculation in a three-phase coordinate system, etc., and the present disclosure is not limited thereto.

Although the flow chart of the steps S403, S404, S405 and the like in Fig. 3C are connected by arrows, the direction of the arrows does not necessarily represent the order in which the steps are performed. For example, the above steps S403, S404, S405, etc. may also be simultaneously performed or in another order. The present disclosure is not limited thereto.

Next, in step S406, according to the active power $P_{ss}$ of the small-AC-signal, the virtual impedance $L_v$ is calculated with the following formula:

$$L_v = L_{v0} + k_L P_{ss} \qquad (33)$$

Where $L_{v0}$ represents the reference value of the virtual impedance and $k_L$ represents the fourth droop coefficient.

Next, with continued reference to Fig. 3C, step S407. In this step, firstly, the major order of harmonic component of the voltage drop of the virtual impedance can be calculated according to the virtual impedance $L_v$, the major order of harmonic component of the current and the frequency of the fundamental positive sequence reference voltage. Then, the voltage drop of the virtual impedance can be calculated according to the voltage drop of the major order of harmonic component of the virtual impedance.

Next, in step S408, the total reference voltage is generated.

Finally, returning to Fig. 3C, in step S409, the output voltage of the inverter is regulated to follow the total reference voltage, so as to adjust the output voltage.

In this embodiment, as an example, the amplitude $E^*_{ss}$ of the small-AC-signal may be equal to or less than 3V, but is not limited thereto. In addition, the number of at least one major order of harmonic component of the current may be plural. The at least one major order of harmonic component of the current includes a first major order of harmonic component of the current and a second major order of harmonic component of the current. For example, the first major order of harmonic component of the current and the second major order of harmonic component of the current may be one of a 5th harmonic component, a 7th harmonic component and an 11th harmonic component, respectively, but the present disclosure is not limited thereto.

In another embodiment, there is provided a device for performing the method of the first embodiment, for controlling the distribution of unbalanced and harmonic power among a plurality of inverters in parallel, and the plurality of inverters are in the islanded operation state. The embodiment of the present disclosure controls the distribution of unbalanced and harmonic power by injecting a small alternating current signal in each inverter. It is assumed that the voltage amplitude of a given small-AC-signal is $E_{ss}^*$.

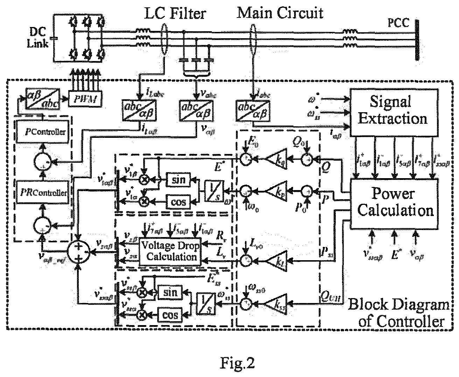

Reference is now made to the exemplary system framework shown in Fig. 2. In the system of Fig. 2, the portion shown in the dashed box is a control device including an exemplary circuit structure as illustrated, which can be divided into the following modules: a sampling and signal extraction module, a power calculation module, a positive-sequence-reference-voltage calculation module, an AC-small-signal-frequency-reference-value calculation module, a small-signal-active-power calculation module, a virtual-impedance calculation module, a voltage-drop calculation module, a total-reference-voltage generation module, and an output-voltage control module.

The sampling and signal extraction module may be configured to sample the output voltage and the output current of each inverter, and extract a fundamental positive sequence component of the current, a fundamental negative sequence component of the current, at least one major order of harmonic component of the current, and a current component of the injected small-AC-signal from the output current.

The power calculation module may be configured to calculate the active power $P$ and the reactive power $Q$ of the inverter according to the output voltage and the fundamental positive sequence component of the current of the inverter, and calculate the unbalanced and harmonic power $Q_{UH}$ according to the fundamental negative sequence component of the current and the at least one major order of harmonic component of the current.

The positive-sequence-reference-voltage calculation module may be configured to calculate the frequency and amplitude of the fundamental positive sequence reference voltage according to the active power $P$ and the reactive power $Q$ of the inverter.

The AC-small-signal-frequency-reference-value calculation module may configured to calculate the frequency reference value $\omega_{ss}{}^*$ of the small-AC-signal according to the unbalanced and harmonic power $Q_{UH}$.

The small-signal-active-power calculation module may be configured to calculate the active power $P_{ss}$ generated by the small-AC-signal according to the amplitude $E_{ss}{}^*$ of the small-AC-signal, the frequency reference value $\omega_{ss}{}^*$ of the small-AC-signal, and the current components of the small-AC-signal.

The virtual-impedance calculation module may be configured to calculate a virtual impedance $L_v$ according to the active power $P_{ss}$ generated by the small-AC-signal.

The voltage-drop calculation module may be configured to calculate a voltage drop of the virtual impedance according to the virtual impedance $L_v$, the fundamental negative sequence component of the current, the at least one major order of harmonic component of the current, and the frequency of the fundamental positive sequence reference voltage.

The total-reference-voltage generation module may be configured to generate a total reference voltage according to the frequency and amplitude of the fundamental positive sequence reference voltage, the voltage drop of the virtual impedance, the amplitude of the small-AC-signal, and the frequency reference value $\omega_{ss}{}^*$ of the small-AC-signal.

The output-voltage control module may be configured to regulate the output voltage of the inverter to follow the total reference voltage.

It should be understood that the details of the embodiments are intended to assist those skilled in the art to understand the present disclosure and not to limit the present disclosure. The details will be described below with reference to exemplary embodiments. It should be understood that the load of the present disclosure may also be one or more of a single phase load, a non-linear load, a three-phase load etc., the principles of which are the same. For the sake of clarity and conciseness, a three-phase load is taken as an example in this embodiment, and the output of the inverter is a three-phase currents and a three-phase voltage.

The sampling and signal extraction module may include: a sampling sub-module and a signal extraction sub-module.

The sampling sub-module may be configured to sample three-phase voltages $v_a$, $v_b$, and $v_c$ of the output voltage of the inverter and the three-phase currents $i_a$, $i_b$, and $i_c$ of the output current of the inverter. Further, the sampling sub-module may be configured to transform the voltages and currents into a two-phase stationary $\alpha\beta$ coordinate system through a Clarke transformation matrix, to obtain components $v_\alpha$ and $v_\beta$ of the three-phase voltages in the two-phase stationary $\alpha\beta$ coordinate system and components $i_\alpha$ and $i_\beta$ of the three-phase currents in the two-phase stationary $\alpha\beta$ coordinate system.

The signal extraction sub-module may be configured to, according to the components $i_\alpha$ and $i_\beta$ of the three-phase currents in the two-phase stationary $\alpha\beta$ coordinate system, extract the fundamental positive sequence components $i_{1\alpha}{}^+$ and $i_{1\beta}{}^+$ of the current and the fundamental negative sequence components $i_{1\alpha}{}^-$ and $i_{1\beta}{}^-$ of the current, the major order of harmonic components $i_{h\alpha}$ and $i_{h\beta}$ of the current and the current components $i_{ss\alpha}{}^+$ and $i_{ss\beta}{}^+$ of the small-AC-signal in the two-phase stationary $\alpha\beta$ coordinate system. The method for extracting various current components is not limited to the two-phase stationary $\alpha\beta$ coordinate system, and other methods for extracting components are applicable. For example, it can also be extracted in a three-phase coordinate system, and the present disclosure is not limited thereto.

The power calculation module may include: a fundamental-active-power-and-reactive-power calculation sub-module and an unbalanced-and-harmonic-power calculation sub-module.

The fundamental-active-power-and-reactive-power calculation sub-module may be configured to calculate the active power $P$ and the reactive power $Q$ from the output voltages $v_\alpha$ and $v_\beta$ in the two-phase stationary $\alpha\beta$ coordinate

system and the fundamental positive sequence components $i_{1\alpha}{}^+$ and $i_{1\beta}{}^+$ of the current in the two-phase stationary $\alpha\beta$ coordinate system, for example, with the following formula:

$$P = \frac{3}{2(\tau s + 1)}\left(v_\alpha i_{1\alpha}^+ + v_\beta i_{1\beta}^+\right) \qquad (1)$$

$$Q = \frac{3}{2(\tau s + 1)}\left(v_\beta i_{1\alpha}^+ - v_\alpha i_{1\beta}^+\right) \qquad (2)$$

Where $\tau$ represents the time constant of the low pass filter.

The unbalanced-and-harmonic-power calculation sub-module may be configured to calculate the unbalanced and harmonic power $Q_{UH}$ from the fundamental negative sequence components $i_{1\alpha}{}^-$ and $i_{1\beta}{}^-$ of the current and the major order of harmonic components $i_{h\alpha}$ and $i_{h\beta}$ of the current in the two-phase stationary $\alpha\beta$ coordinate system, for example, with the following formula:

$$Q_{UH} = \frac{3}{2}E^*\sqrt{\left(i_{1\alpha}^-\right)^2 + \left(i_{1\beta}^-\right)^2 + \sum_h\left[\left(i_{h\alpha}\right)^2 + \left(i_{h\beta}\right)^2\right]} \qquad (3)$$

Where $E^*$ represents the amplitude of the fundamental positive sequence reference voltage and h represents the harmonic order.

The positive-sequence-reference-voltage calculation module may be configured to, according to the active power $P$ and the reactive power $Q$ of the inverter, calculate the frequency $\omega^*$ of the fundamental positive sequence reference voltage and the amplitude $E^*$ of the fundamental positive sequence reference voltage, for example, with the following formula:

$$\omega^* = \omega_0 - k_p(P - P_0) \qquad (4)$$

$$E^* = E_0 - k_q(Q - Q_0) \qquad (5)$$

Where $P_0$ and $Q_0$ are the rated values of the active power and reactive power of the inverter, respectively, $\omega_0$ and $E_0$ are the rated frequency and rated voltage of the inverter, respectively, and $k_p$ and $k_q$ are the first and second droop coefficients, respectively, both of which are positive values.

The AC-small-signal-frequency-reference-value calculation module may be configured to calculate the frequency reference value $\omega_{ss}{}^*$ of the small-AC-signal according to the unbalanced and harmonic power $Q_{UH}$, for example, with the following formula:

$$\omega_{ss}^* = \omega_{ss0} + k_{ss}Q_{UH} \qquad (6)$$

Where $\omega_{ss0}$ is the frequency benchmark value of the small-AC-signal and $k_{ss}$ represents the third droop coefficient. The frequency benchmark value $\omega_{ss0}$ of the small-AC-signal is different from the frequencies of the fundamental positive sequence component of the current, the fundamental negative sequence component of the current, and the major order of harmonic component of the current.

In this embodiment, n inverters may be included in the microgrid, and n is a positive integer. When the capacities $S_1, S_2 ... S_n$ of the respective inverters 1, 2, ... n are the same, the third droop coefficient of each inverter can be the same. When the capacities of respective inverters $S_1, S_2 ... S_n$ are different, they can be designed according to the following formula:

$$k_{ss1}S_1 = k_{ss2}S_2 = \cdots = k_{ssn}S_n \qquad (7)$$

Where $k_{ss1},..k_{ssn}$ represent the third droop coefficients of the inverters 1, 2...n, respectively.

The small-signal-active-power calculation module may be configured to calculate the active power $P_{ss}$ of the small-AC-signal according to the amplitude $E_{ss}^*$ of the small-AC-signal, the frequency reference value $\omega_{ss}^*$ of the small-AC-signal, and the current components $i_{ss\alpha}^+$ and $i_{ss\beta}^+$ of the small-AC-signal in the two-phase stationary $\alpha\beta$ coordinate system.

The small-signal-active-power calculation module may be configured to calculate the small-AC-signal reference voltages $v_{ss\alpha}^*$ and $v_{ss\beta}^*$ in the two-phase stationary $\alpha\beta$ coordinate system according to the amplitude $E_{ss}^*$ of the small-AC-signal and the frequency reference value $\omega_{ss}^*$ of the small-AC-signal with the following formula:

$$v_{ss\alpha}^* = E_{ss}^* \cos\left(\omega_{ss}^* t\right) \qquad (8)$$

$$v_{ss\beta}^* = E_{ss}^* \sin\left(\omega_{ss}^* t\right) \qquad (9)$$

Where t represents the time.

Then, according to the small-AC-signal reference voltages $v_{ss\alpha}^*$ and $v_{ss\beta}^*$ in the two-phase stationary $\alpha\beta$ coordinate system and the current components $i_{ss\alpha}^+$ and $i_{ss\beta}^+$ of the small-AC-signal, the active power $P_{ss}$ generated by the small-AC-signal is calculated with the following formula:

$$P_{ss} = \frac{3}{2(\tau s + 1)}\left(v_{ss\alpha}^* i_{ss\alpha}^+ + v_{ss\beta}^* i_{ss\beta}^+\right) \qquad (10)$$

Where $\tau$ represents the time constant of the low pass filter.

The virtual-impedance calculation module may be configured to calculate the virtual impedance $L_v$ according to the active power $P_{ss}$ of the small-AC-signal with the following formula:

$$L_v = L_{v0} + k_L P_{ss} \qquad (11)$$

Where $L_{v0}$ represents the reference value of the virtual impedance and $k_L$ represents the fourth droop coefficient.

The voltage-drop calculation module may be configured to calculate the fundamental negative sequence component of the voltage drop of the virtual impedance according to the virtual impedance $L_v$, the fundamental negative sequence component of the current and the frequency of the fundamental positive sequence reference voltage; then, calculate the major order of harmonic component of the voltage drop of the virtual impedance according to the virtual impedance $L_v$, the major order of harmonic component of the current and the frequency of the fundamental positive sequence reference voltage; and finally, calculate the voltage drop of the virtual impedance according to the voltage drop of the negative impedance component of the virtual impedance and the voltage drop of the major order of harmonic component of the virtual impedance.

Next, the total-reference-voltage generation module may be configured to generate a total reference voltage. The total reference voltage $V_{\alpha\beta\_ref}$ may be generated according to the frequency and amplitude of the fundamental positive sequence reference voltage, the voltage drop of the virtual impedance, the amplitude of the small-AC-signal, and the frequency reference value $\omega_{ss}^*$ of the small-AC-signal.

Finally, the output-voltage control module may be configured to regulate the output voltage of the inverter to follow the total reference voltage, so as to adjust the output voltage.

In this embodiment, as an example, the amplitude $E_{ss}^*$ of the small-AC-signal may be equal to or less than 3V, but is not limited thereto. In addition, the number of at least one major order of harmonic component of the current may be plural. The at least one major order of harmonic component of the current includes a first major order of harmonic component of the current and a second major order of harmonic component of the current, and the unbalanced and harmonic power $Q_{UH}$ is calculated according to the fundamental negative sequence component of the current, the first major order of harmonic component of the current, and the second major order of harmonic component of the current. For example, the first major order of harmonic component of the current and the second major order of harmonic component of the current may be one of a 5th harmonic component, a 7th harmonic component and an 11th harmonic

component, respectively, but the present disclosure is not limited thereto.

In another embodiment, there is provided a device for performing the method of the second embodiment. For the sake of clarity and conciseness, in this embodiment, a three-phase load is taken as an example for description, and the inverter outputs three-phase currents and three-phase voltage. It should be understood that the load of the present disclosure may also be a single phase load, a non-linear load, or the like.

The device of this embodiment is configured to control the distribution of unbalanced power among a plurality of inverters connected in parallel and being in an islanded operation state, by injecting a small alternating current signal in each inverter, respectively. It is assumed that the amplitude of the given small-AC-signal is $E_{ss}$*. The control device further includes: a sampling and signal extraction module, a power calculation module, a positive-sequence-reference-voltage calculation module, an AC-small-signal-frequency-reference-value calculation module, a small-signal-active-power calculation module, a virtual-impedance calculation module, a voltage-drop calculation module, a total-reference-voltage generation module, and an output-voltage control module.

The sampling and signal extraction module may be configured to sample the output voltage and the output current of each inverter, and extract a fundamental positive sequence component of the current, a fundamental negative sequence component of the current and a current component of the injected small-AC-signal from the output current.

The power calculation module may be configured to calculate the active power $P$ and the reactive power $Q$ of the inverter according to the output voltage and the fundamental positive sequence component of the current of the inverter, and calculate the unbalanced power $Q_U$ according to the fundamental negative sequence component of the current.

The positive-sequence-reference-voltage calculation module may be configured to calculate the frequency and amplitude of the fundamental positive sequence reference voltage according to the active power $P$ and the reactive power $Q$ of the inverter.

The AC-small-signal-frequency-reference-value calculation module may configured to calculate the frequency reference value $\omega_{ss}$* of the small-AC-signal according to the unbalanced power $Q_U$.

The small-signal-active-power calculation module may be configured to calculate the active power $P_{ss}$ generated by the small-AC-signal according to the amplitude $E_{ss}$* of the small-AC-signal, the frequency reference value $\omega_{ss}$* of the small-AC-signal, and the current components of the small-AC-signal.

The virtual-impedance calculation module may be configured to calculate a virtual impedance $L_v$ according to the active power $P_{ss}$ generated by the small-AC-signal.

The voltage-drop calculation module may be configured to calculate a voltage drop of the virtual impedance according to the virtual impedance $L_v$, the fundamental negative sequence component of the current, and the frequency of the fundamental positive sequence reference voltage.

The total-reference-voltage generation module may be configured to generate a total reference voltage according to the frequency and amplitude of the fundamental positive sequence reference voltage, the voltage drop of the virtual impedance, the amplitude of the small-AC-signal, and the frequency reference value $\omega_{ss}$* of the small-AC-signal.

The output-voltage control module may be configured to regulate the output voltage of the inverter to follow the total reference voltage.

This embodiment is an example of a device for controlling an inverter to realize even distribution of unbalanced power. For the sake of clarity and conciseness, a three-phase load is taken as an example in this embodiment, and the output of the inverter is a three-phase currents and a three-phase voltage. It should be understood that the load of the present disclosure may also be a single phase load, a non-linear load, etc., the principles of which are the same.

The sampling and signal extraction module may include: a sampling sub-module and a signal extraction sub-module.

The sampling sub-module may be configured to sample three-phase voltages $v_a$, $v_b$, and $v_c$ of the output voltage of the inverter and the three-phase currents $i_a$, $i_b$, and $i_c$ of the output current of the inverter, and transform the voltages and currents into a two-phase stationary $\alpha\beta$ coordinate system through a Clarke transformation matrix, to obtain components $v_\alpha$ and $v_\beta$ of the three-phase voltages in the two-phase stationary $\alpha\beta$ coordinate system and components $i_\alpha$ and $i_\beta$ of the three-phase currents in the two-phase stationary $\alpha\beta$ coordinate system.

The signal extraction sub-module may be configured to, according to the components $i_\alpha$ and $i_\beta$ of the three-phase currents in the two-phase stationary $\alpha\beta$ coordinate system, extract the fundamental positive sequence components $i_{1\alpha}{}^+$ and $i_{1\beta}{}^+$ of the current and the fundamental negative sequence components $i_{1\alpha}{}^-$ and $i_{1\beta}{}^-$ of the current, and the current components $i_{ss\alpha}{}^+$ and $i_{ss\beta}{}^+$ of the small-AC-signal in the two-phase stationary $\alpha\beta$ coordinate system. The method for extracting various current components is not limited to the two-phase stationary $\alpha\beta$ coordinate system, and other methods for extracting components are applicable. For example, it can also be extracted in a three-phase coordinate system, and the present disclosure is not limited thereto.

The schematic diagram of the signal extraction can be referred to Fig. 4, which has been described in detail in the foregoing first embodiment, and details are not described herein again.

The power calculation module may include: a fundamental-active-power-and-reactive-power calculation sub-module and an unbalanced -power calculation sub-module.

The fundamental-active-power-and-reactive-power calculation sub-module may be configured to calculate the active power $P$ and the reactive power $Q$ from the output voltages $v_\alpha$ and $v_\beta$ in the two-phase stationary $\alpha\beta$ coordinate system and the fundamental positive sequence components $i_{1\alpha}{}^+$ and $i_{1\beta}{}^+$ of the current in the two-phase stationary $\alpha\beta$ coordinate system, for example, with the following formula:

$$P = \frac{3}{2(\tau s + 1)}\left(v_\alpha i_{1\alpha}^+ + v_\beta i_{1\beta}^+\right) \qquad (12)$$

$$Q = \frac{3}{2(\tau s + 1)}\left(v_\beta i_{1\alpha}^+ - v_\alpha i_{1\beta}^+\right) \qquad (13)$$

Where $\tau$ represents the time constant of the low pass filter.

The unbalanced-power calculation sub-module may be configured to calculate the unbalanced power $Q_U$ from the fundamental negative sequence components $i_{1\alpha}{}^-$ and $i_{1\beta}{}^-$ of the current in the two-phase stationary $\alpha\beta$ coordinate system, for example, with the following formula:

$$Q_U = \frac{3}{2}E^*\sqrt{\left(i_{1\alpha}^-\right)^2 + \left(i_{1\beta}^-\right)^2} \qquad (14)$$

Where $E^*$ represents the amplitude of the fundamental positive sequence reference voltage.

The positive-sequence-reference-voltage calculation module may be configured to, according to the active power $P$ and the reactive power $Q$ of the inverter, calculate the frequency $\omega^*$ of the fundamental positive sequence reference voltage and the amplitude $E^*$ of the fundamental positive sequence reference voltage:

$$\omega^* = \omega_0 - k_p(P - P_0) \qquad (15)$$

$$E^* = E_0 - k_q(Q - Q_0) \qquad (16)$$

Where $P_0$ and $Q_0$ are the rated values of the active power and reactive power of the inverter, respectively, $\omega_0$ and $E_0$ are the rated frequency and rated voltage of the inverter, respectively, and $k_p$ and $k_q$ are the first and second droop coefficients, respectively, both of which are positive values.

The AC-small-signal-frequency-reference-value calculation module may be configured to calculate the frequency reference value $\omega_{ss}{}^*$ of the small-AC-signal according to the unbalanced power $Q_U$:

$$\omega_{ss}^* = \omega_{ss0} + k_{ss}Q_U \qquad (17)$$

Where $\omega_{ss0}$ is the frequency benchmark value of the small-AC-signal and $k_{ss}$ represents the third droop coefficient. The frequency benchmark value $\omega_{ss0}$ of the small-AC-signal is different from the frequencies of the fundamental positive sequence component of the current, and the fundamental negative sequence component of the current.

In this embodiment, n inverters may be included in the microgrid, and n is a positive integer. When the capacities $S_1, S_2...S_n$ of the respective inverters 1, 2, ... n are the same, the third droop coefficient of each inverter can be the same. When the capacities of respective inverters $S_1, S_2...S_n$ are different, they can be designed according to the following formula:

$$k_{ss1}S_1 = k_{ss2}S_2 = \cdots = k_{ssn}S_n \qquad (18)$$

Where $k_{ss1},..k_{ssn}$ represent the third droop coefficients of the inverters 1, 2...n, respectively.

The small-signal-active-power calculation module may be configured to calculate the active power $P_{ss}$ of the small-AC-signal according to the amplitude $E_{ss}^*$ of the small-AC-signal, the frequency reference value $\omega_{ss}^*$ of the small-AC-signal, and the current components $i_{ss\alpha}^+$ and $i_{ss\beta}^+$ of the small-AC-signal in the two-phase stationary $\alpha\beta$ coordinate system.

The small-signal-active-power calculation module may be configured to calculate the small-AC-signal reference voltages $v_{ss\alpha}^*$ and $v_{ss\beta}^*$ in the two-phase stationary $\alpha\beta$ coordinate system according to the amplitude $E_{ss}^*$ of the small-AC-signal and the frequency reference value $\omega_{ss}^*$ of the small-AC-signal with the following formula:

$$v_{ss\alpha}^* = E_{ss}^* \cos\left(\omega_{ss}^* t\right) \qquad (19)$$

$$v_{ss\beta}^* = E_{ss}^* \sin\left(\omega_{ss}^* t\right) \qquad (20)$$

Where t represents the time.

Then, the small-signal-active-power calculation module may be configured to, according to the small-AC-signal reference voltages $v_{ss\alpha}^*$ and $v_{ss\beta}^*$ in the two-phase stationary $\alpha\beta$ coordinate system and the current components $i_{ss\alpha}^+$ and $i_{ss\beta}^+$ of the small-AC-signal, calculate the active power $P_{ss}$ generated by the small-AC-signal with the following formula:

$$P_{ss} = \frac{3}{2(\tau s + 1)}\left(v_{ss\alpha}^* i_{ss\alpha}^+ + v_{ss\beta}^* i_{ss\beta}^+\right) \qquad (21)$$

Where $\tau$ represents the time constant of the low pass filter.

Next, the virtual-impedance calculation module may be configured to calculate the virtual impedance $L_v$ according to the active power $P_{ss}$ of the small-AC-signal with the following formula:

$$L_v = L_{v0} + k_L P_{ss} \qquad (22)$$

Where $L_{v0}$ represents the reference value of the virtual impedance and $k_L$ represents the fourth droop coefficient.

The voltage-drop calculation module may be configured to calculate the fundamental negative sequence component of the voltage drop of the virtual impedance according to the virtual impedance $L_v$, the fundamental negative sequence component of the current and the frequency of the fundamental positive sequence reference voltage; and calculate the voltage drop of the virtual impedance according to the voltage drop of the negative impedance component of the virtual impedance.

Next, the total-reference-voltage generation module may be configured to generate a total reference voltage.

Finally, the output-voltage control module may be configured to regulate the output voltage of the inverter to follow the total reference voltage, so as to adjust the output voltage.

In this embodiment, as an example, the amplitude $E_{ss}^*$ of the small-AC-signal may be equal to or less than 3V, but is not limited thereto.

In another embodiment, there is provided a control device for performing the method of the third embodiment.

When there is no unbalanced power, this embodiment provides an exemplary device for controlling distribution of harmonic power among a plurality of inverters in parallel.

The present embodiment will be described below with reference to examples. It should be understood that the details of the embodiments are intended to assist those skilled in the art to understand the present disclosure and not to limit the present disclosure.

For the sake of clarity and conciseness, a three-phase load is taken as an example in this embodiment, and the output of the inverter is a three-phase currents and a three-phase voltage. It should be understood that the load of the present disclosure may also be a single phase load, a non-linear load, or the like.

When a plurality of inverters as shown in Fig. 1 are in an islanded operation state, the distribution of unbalanced power is controlled by separately injecting an small-AC-signal in each inverter. Set the amplitude of the given small-AC-

signal to $E_{ss}^*$.

The control device includes: a sampling and signal extraction module, a power calculation module, a positive-sequence-reference-voltage calculation module, an AC-small-signal-frequency-reference-value calculation module, a small-signal-active-power calculation module, a virtual-impedance calculation module, a voltage-drop calculation module, a total-reference-voltage generation module, and an output-voltage control module.

The sampling and signal extraction module may be configured to sample the output voltage and the output current of each inverter, and extract a fundamental positive sequence component of the current, at least one major order of harmonic component of the current, and a current component of the injected small-AC-signal from the output current.

The power calculation module may be configured to calculate the active power $P$ and the reactive power $Q$ of the inverter according to the output voltage and the fundamental positive sequence component of the current of the inverter, and calculate the harmonic power $Q_H$ according to the at least one major order of harmonic component of the current.

The positive-sequence-reference-voltage calculation module may be configured to calculate the frequency and amplitude of the fundamental positive sequence reference voltage according to the active power $P$ and the reactive power $Q$ of the inverter.

The AC-small-signal-frequency-reference-value calculation module may configured to calculate the frequency reference value $\omega_{ss}^*$ of the small-AC-signal according to harmonic power $Q_H$.

The small-signal-active-power calculation module may be configured to calculate the active power $P_{ss}$ generated by the small-AC-signal according to the amplitude $E_{ss}^*$ of the small-AC-signal, the frequency reference value $\omega_{ss}^*$ of the small-AC-signal, and the current component $i_{ss\alpha}^+$ and $i_{ss\beta}^+$ of the small-AC-signal.

The virtual-impedance calculation module may be configured to calculate a virtual impedance $L_v$ according to the active power $P_{ss}$ generated by the small-AC-signal.

The voltage-drop calculation module may be configured to calculate a voltage drop of the virtual impedance according to the virtual impedance $L_v$, the at least one major order of harmonic component of the current, and the frequency of the fundamental positive sequence reference voltage.

The total-reference-voltage generation module may be configured to generate a total reference voltage according to the frequency and amplitude of the fundamental positive sequence reference voltage, the voltage drop of the virtual impedance, the amplitude of the small-AC-signal, and the frequency reference value $\omega_{ss}^*$ of the small-AC-signal.

The output-voltage control module may be configured to regulate the output voltage of the inverter to follow the total reference voltage.

This embodiment is an example of a device for controlling an inverter to realize even to realize even distribution of harmonic power. For the sake of clarity and conciseness, a three-phase load is taken as an example in this embodiment, and the output of the inverter is a three-phase currents and a three-phase voltage. It should be understood that the load of the present disclosure may also be a single phase load, a non-linear load, or the like.

The sampling and signal extraction module may include: a sampling sub-module and a signal extraction sub-module.

The sampling sub-module may be configured to sample three-phase voltages $v_a$, $v_b$, and $v_c$ of the output voltage of the inverter and the three-phase currents $i_a$, $i_b$, and $i_c$ of the output current of the inverter. The sampling sub-module may be configured to transform the voltages and currents into a two-phase stationary $\alpha\beta$ coordinate system through a Clarke transformation matrix, to obtain components $v_\alpha$ and $v_\beta$ of the three-phase voltages in the two-phase stationary $\alpha\beta$ coordinate system and components $i_\alpha$ and $i_\beta$ of the three-phase currents in the two-phase stationary $\alpha\beta$ coordinate system.

The signal extraction sub-module may be configured to, according to the components $i_\alpha$ and $i_\beta$ of the three-phase currents in the two-phase stationary $\alpha\beta$ coordinate system, extract the fundamental positive sequence components $i_{1\alpha}^+$ and $i_{1\beta}^+$ of the current and the major order of harmonic components $i_{h\alpha}$ and $i_{h\beta}$ of the current and the current components $i_{ss\alpha}^+$ and $i_{ss\beta}^+$ of the small-AC-signal in the two-phase stationary $\alpha\beta$ coordinate system. The method for extracting various current components is not limited to the two-phase stationary $\alpha\beta$ coordinate system, and other methods for extracting components are applicable. For example, it can also be extracted in a three-phase coordinate system, and the present disclosure is not limited thereto.

The schematic diagram of the signal extraction can be referred to Fig. 4, which has been described in detail in the foregoing first embodiment, and details are not described herein again.

The power calculation module may include: a fundamental-active-power-and-reactive-power calculation sub-module and a harmonic-power calculation sub-module.

The fundamental-active-power-and-reactive-power calculation sub-module may be configured to calculate the active power $P$ and the reactive power $Q$ from the output voltages $v_\alpha$ and $v_\beta$ in the two-phase stationary $\alpha\beta$ coordinate system and the fundamental positive sequence components $i_{1\alpha}^+$ and $i_{1\beta}^+$ of the current in the two-phase stationary $\alpha\beta$ coordinate system, for example, with the following formula:

$$P = \frac{3}{2(\tau s + 1)}\left(v_\alpha i_{1\alpha}^{+} + v_\beta i_{1\beta}^{+}\right) \qquad (23)$$

$$Q = \frac{3}{2(\tau s + 1)}\left(v_\beta i_{1\alpha}^{+} - v_\alpha i_{1\beta}^{+}\right) \qquad (24)$$

Where $\tau$ represents the time constant of the low pass filter.

The harmonic-power calculation sub-module may be configured to calculate the harmonic power $Q_H$ from the major order of harmonic components $i_{h\alpha}$ and $i_{h\beta}$ of the current in the two-phase stationary $\alpha\beta$ coordinate system, for example, with the following formula:

$$Q_H = \frac{3}{2}E^*\sqrt{\sum_h \left[\left(i_{h\alpha}\right)^2 + \left(i_{h\beta}\right)^2\right]} \qquad (25)$$

Where $E^*$ represents the amplitude of the fundamental positive sequence reference voltage and h represents the harmonic order.

The positive-sequence-reference-voltage calculation module may be configured to, according to the active power $P$ and the reactive power $Q$ of the inverter, calculate the frequency $\omega^*$ of the fundamental positive sequence reference voltage and the amplitude $E^*$ of the fundamental positive sequence reference voltage, for example, with the following formula:

$$\omega^* = \omega_0 - k_p(P - P_0) \qquad (26)$$

$$E^* = E_0 - k_q(Q - Q_0) \qquad (27)$$

Where $P_0$ and $Q_0$ are the rated values of the active power and reactive power of the inverter, respectively, $\omega_0$ and $E_0$ are the rated frequency and rated voltage of the inverter, respectively, and $k_p$ and $k_q$ are the first and second droop coefficients respectively and they are all positive values.

Then, the AC-small-signal-frequency-reference-value calculation module may be configured to calculate the frequency reference value $\omega_{ss}^*$ of the small-AC-signal according to the harmonic power $Q_H$, for example, with the following formula:

$$\omega_{ss}^* = \omega_{ss0} + k_{ss}Q_H \qquad (28)$$

Where $\omega_{ss0}$ is the frequency benchmark value of the small-AC-signal and $k_{ss}$ represents the third droop coefficient. The frequency benchmark value $\omega_{ss0}$ of the small-AC-signal is different from the frequencies of the fundamental positive sequence component of the current, and the major order of harmonic component of the current.

In this embodiment, n inverters may be included in the microgrid, and n is a positive integer. When the capacities $S_1, S_2 ... S_n$ of the respective inverters 1, 2, ... $n$ are the same, the third droop coefficient of each inverter can be the same. When the capacities of respective inverters $S_1, S_2 ... S_n$ are different, they can be designed according to the following formula:

$$k_{ss1}S_1 = k_{ss2}S_2 = \cdots = k_{ssn}S_n \qquad (29)$$

Where $k_{ss1}, .. k_{ssn}$ represent the third droop coefficients of the inverters 1, 2...n, respectively.

The small-signal-active-power calculation module may be configured to calculate the active power $P_{ss}$ of the small-AC-signal according to the amplitude $E_{ss}^*$ of the small-AC-signal, the frequency reference value $\omega_{ss}^*$ of the small-

AC-signal, and the current components $i_{ss\alpha}{}^+$ and $i_{ss\beta}{}^+$ of the small-AC-signal in the two-phase stationary $\alpha\beta$ coordinate system.

Firstly, the small-AC-signal reference voltages $v^*_{ss\alpha}$ and $v^*_{ss\beta}$ in the two-phase stationary $\alpha\beta$ coordinate system according to the amplitude $E_{ss}{}^*$ of the small-AC-signal and the frequency reference value $\omega_{ss}{}^*$ of the small-AC-signal are calculated with the following formula:

$$v^*_{ss\alpha} = E^*_{ss}\cos\left(\omega^*_{ss}t\right) \qquad (30)$$

$$v^*_{ss\beta} = E^*_{ss}\sin\left(\omega^*_{ss}t\right) \qquad (31)$$

Where t represents the time.

Then, according to the small-AC-signal reference voltages $v^*_{ss\alpha}$ and $v^*_{ss\beta}$ in the two-phase stationary $\alpha\beta$ coordinate system and the current components $i_{ss\alpha}{}^+$ and $i_{ss\beta}{}^+$ of the small-AC-signal, the active power $P_{ss}$ generated by the small-AC-signal is calculated with the following formula, for example:

$$P_{ss} = \frac{3}{2(\tau s+1)}\left(v^*_{ss\alpha}i^+_{ss\alpha} + v^*_{ss\beta}i^+_{ss\beta}\right) \qquad (32)$$

Where $\tau$ represents the time constant of the low pass filter.

Next, the virtual-impedance calculation module may be configured to calculate the virtual impedance $L_v$ according to the active power $P_{ss}$ of the small-AC-signal with the following formula:

$$L_v = L_{v0} + k_L P_{ss} \qquad (33)$$

Where $L_{v0}$ represents the reference value of the virtual impedance and $k_L$ represents the fourth droop coefficient.

The voltage-drop calculation module may be configured to calculate the major order of harmonic component of the voltage drop of the virtual impedance according to the virtual impedance $L_v$, the major order of harmonic component of the current and the frequency of the fundamental positive sequence reference voltage; and calculate the voltage drop of the virtual impedance according to the voltage drop of the major order of harmonic component of the virtual impedance.

Next, the total-reference-voltage generation module may be configured to generate a total reference voltage. The total reference voltage $V_{\alpha\beta\_ref}$ may be generated according to the frequency and amplitude of the fundamental positive sequence reference voltage, the voltage drop of the virtual impedance, the amplitude of the small-AC-signal, and the frequency reference value $\omega_{ss}{}^*$ of the small-AC-signal.

Finally, the output-voltage control module may be configured to regulate the output voltage of the inverter to follow the total reference voltage, so as to adjust the output voltage.

In this embodiment, as an example, the amplitude $E^*_{ss}$ of the small-AC-signal may be equal to or less than 3V, but is not limited thereto. In addition, the number of at least one major order of harmonic component of the current may be plural. The at least one major order of harmonic component of the current includes a first major order of harmonic component of the current and a second major order of harmonic component of the current. For example, the first major order of harmonic component of the current and the second major order of harmonic component of the current may be one of a 5th harmonic component, a 7th harmonic component and an 11th harmonic component, respectively, but the present disclosure is not limited thereto.

Another embodiment according to the above embodiments provides a technical solution for realizing even distribution of the unbalanced and harmonic power of the parallel inverters, and the principle thereof is as shown in Figs. 2 to 4. Simulation and experimental results are shown in Figs. 5 and 6.

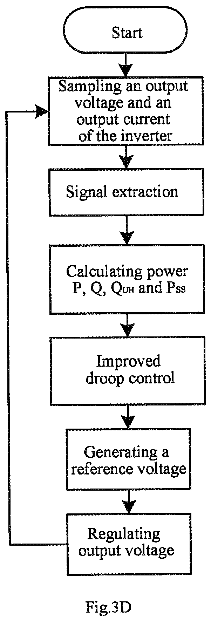

Now reference is made to Fig. 3D. Fig. 3D is a flow chart illustrating a method for controlling an inverter to realize even distribution of harmonic power according to an embodiment of the present disclosure. As shown in Fig. 3D, the control method may include the following steps.

In step 1, the voltage and current output by the inverter are sampled, and the fundamental positive sequence component, the fundamental negative sequence component, the major order of harmonic component and the small signal component in the current signal are extracted.

In step 2, the active power P, the reactive power Q, the unbalanced and harmonic power $Q_{UH}$ and the active power $P_{ss}$ generated by the small signal are calculated.

In step 3, the frequency and amplitude of the fundamental positive sequence reference voltage, the virtual impedance and the frequency of the small signal are respectively calculated through an improved droop formula according to part or all of the four power values calculated in step 2.

In step 4, three voltage signals, that is, the fundamental positive sequence reference voltage, the voltage drop of the virtual impedance and the small signal reference voltage are generated after step 3, and are superimposed so as to obtain a total reference voltage.

In step 5, a suitable voltage loop compensator and current loop compensator are designed to regulate the output voltage of the inverter to follow the total reference voltage.

This embodiment is substantially equivalent to some of the foregoing embodiments, even if that in the control cycle iteration process, the steps may be further changed in orders or integrated, and the present disclosure is not limited thereto.

In the present embodiment and the above embodiments, if the major order of harmonic order is the 5th and 7th harmonics, the following equation can be considered to calculate the unbalanced and harmonic power $Q_{UH}$,

$$Q_{UH} = \frac{3}{2} E^* \sqrt{\left(i_{1\alpha}^-\right)^2 + \left(i_{1\beta}^-\right)^2 + \left(i_{5\alpha}^-\right)^2 + \left(i_{5\beta}^-\right)^2 + \left(i_{7\alpha}^+\right)^2 + \left(i_{7\beta}^+\right)^2}$$

Where $E^*$ represents the amplitude of the fundamental positive sequence reference voltage, $i_{1\alpha}^-$, $i_{1\beta}^-$, $i_{5\alpha}^-$, $i_{5\beta}^-$, $i_{7\alpha}^+$ and $i_{7\beta}^+$ respectively represent $\alpha$-axis component and $\beta$-axis component of the fundamental negative sequence current and the major orders of harmonic currents to be evenly distributed, which are obtained in the signal extraction step. The calculation formula is only an example, and other methods may also be applicable as long as the unbalanced and harmonic power output of the system can be accurately calculated.

In the present embodiment and the above embodiments, the voltage drop $v_{z\alpha}$ and $v_{z\beta}$ of the virtual impedance may be calculated according to the following formula using the following equation, taking the 5th harmonic and the 7th harmonic as an example of the major orders of harmonics:

$$\begin{bmatrix} v_{1\alpha}^- \\ v_{1\beta}^- \end{bmatrix} = \begin{bmatrix} R_{v1} & \omega^* L_v \\ -\omega^* L_v & R_{v1} \end{bmatrix} \begin{bmatrix} i_{1\alpha}^- \\ i_{1\beta}^- \end{bmatrix}$$

$$\begin{bmatrix} v_{5\alpha}^- \\ v_{5\beta}^- \end{bmatrix} = \begin{bmatrix} R_{v5} & 5\omega^* L_v \\ -5\omega^* L_v & R_{v5} \end{bmatrix} \begin{bmatrix} i_{5\alpha}^- \\ i_{5\beta}^- \end{bmatrix}$$

$$\begin{bmatrix} v_{7\alpha}^+ \\ v_{7\beta}^+ \end{bmatrix} = \begin{bmatrix} R_{v7} & -7\omega^* L_v \\ 7\omega^* L_v & R_{v7} \end{bmatrix} \begin{bmatrix} i_{7\alpha}^+ \\ i_{7\beta}^+ \end{bmatrix}$$

$$\begin{bmatrix} v_{z\alpha} \\ v_{z\beta} \end{bmatrix} = \begin{bmatrix} v_{1\alpha}^- + v_{5\alpha}^- + v_{7\alpha}^+ \\ v_{1\beta}^- + v_{5\beta}^- + v_{7\beta}^+ \end{bmatrix}$$

When the harmonic component or the unbalanced component is not required to calculated, the corresponding item may be omitted.

In this embodiment and the above embodiments, it may be considered to superimpose the fundamental positive sequence reference voltage, the reference voltage of the small signal, and the voltage drop of the virtual impedance obtained by the following formula to obtain a total reference voltage:

$$\begin{bmatrix} v_{\alpha\_ref} \\ v_{\beta\_ref} \end{bmatrix} = \begin{bmatrix} v_{1\alpha}^{*} + v_{ss\alpha}^{*} - v_{z\alpha} \\ v_{1\beta}^{*} + v_{ss\beta}^{*} - v_{z\beta} \end{bmatrix}$$

When the harmonic component or the unbalanced component is not required to calculated, the corresponding item may be omitted.

In the present embodiment and the above embodiments, if the major orders of harmonics are the 5th and 7th harmonics, it is considered that the total reference voltages $v_{\alpha\_ref}$ and $v_{\beta\_ref}$ are obtained as the command signals for adjusting the output voltage of the inverter.

In this embodiment, although the major orders of harmonics are the 5th harmonic and 7th harmonic, and the present disclosure is not limited thereto.

In addition, it is worth noting that the voltage loop compensator or the current loop compensator can be implemented as a proportional resonance (PR) controller with appropriate parameters in the two-phase stationary coordinate system (i.e., $\alpha\beta$ coordinate system) as desired. In an alternative embodiment, the current inner loop can be omitted as long as the total reference voltage obtained can be accurately followed. Here, only the PR controller is taken as an example, but it is not limited thereto. Other voltage loop controllers such as PI proportional integral controller and deadbeat controller can also be used.

Now, reference is made to Fig. 8. Fig. 8 is a block diagram of a device for controlling an inverter to realize the unbalanced and harmonic power according to an embodiment of the present disclosure, which corresponds to the seventh embodiment. The control device specifically includes: a signal extraction module, a power calculation module, an improved droop control module, a reference-voltage generation module and a voltage control module.

The signal extraction module is configured to sample the voltage and current output by the inverter, and extract the fundamental positive sequence component, the fundamental negative sequence component, the major order of harmonic component and the small signal component in the current signal.

The power calculation module is configured to calculate the active power P, the reactive power Q, the unbalanced and harmonic power $Q_{UH}$ and the active power $P_{ss}$ generated by the small signal.

The improved droop control module is configured to respectively calculate the frequency and amplitude of the fundamental positive sequence reference voltage, the virtual impedance and the frequency of the small signal through an improved droop formula according to part or all of the four power values calculated by the power calculation module.

The reference-voltage generation module is configured to generate the fundamental positive sequence reference voltage, the voltage drop of the virtual impedance and the small signal reference voltage from the output of the improved droop control module, and superimpose the three voltage signals as a total reference voltage.

The voltage control module is configured to regulate the output voltage of the inverter to follow the total reference voltage by designing a suitable voltage controller.

By designing a suitable voltage controller, the output voltage of the inverter follows the total reference voltage.

This embodiment is substantially equivalent to some of the foregoing embodiments, except that in the control cycle iteration process, the steps may be further changed in orders or integrated, and the present disclosure is not limited thereto.

There are a variety of extraction methods. The present disclosure is described by taking an extraction method according to a biquad generalized integrator with a decoupling network as an example, but is not limited thereto, and the present disclosure is not limited to an extraction technique. In addition, this embodiment is described by taking the $\alpha\beta$ system as an example, but the present disclosure is not limited thereto, and the same effect can be achieved by control in other coordinate systems.

Next, please refer to Figs. 5-6 again. Fig. 5 is a diagram illustrating simulation waveforms of unbalanced and harmonic power output from two inverters in one embodiment of the present disclosure before and after applying the control method of the present disclosure. Fig. 6 is a diagram illustrating simulation waveforms of amplitudes of a fundamental positive sequence current, a fundamental negative sequence current, a fifth harmonic current, and a seventh harmonic current output from two inverters in one embodiment of the present disclosure.

As shown in Fig. 5, before the timing of 3.0 second, the two inverters only use the conventional droop control method. It can be seen that the output unbalanced and harmonic power vary greatly due to different line impedances. At the timing of 3.0 second, the control method of the present disclosure is started. It can be seen that the unbalanced and harmonic power are gradually divided by the two inverters, and finally tend to be consistent. It is worth mentioning that the control method is started at a certain moment only to more clearly compare the difference between the effects of the control method before and after the startup of the control method, and the actual application can be started simultaneously with the system startup.

The simulation results shown in Fig. 6 have a similar trend to the results shown in Fig. 5. The fundamental positive sequence current can be equally divided by the conventional droop control method, so it is evenly divided at the timing of 3s. However, the fundamental negative sequence current and the orders of harmonic currents cannot be evenly distributed by the conventional droop control method. After starting the control method of the present disclosure at the timing of 3.0 second, it can be seen that the fundamental negative sequence current and the harmonic currents are gradually distributed evenly. The effectiveness of the present disclosure can be hereby demonstrated.

The simulation results shown in Fig. 5-6 prove that the control method of the present disclosure can achieve even distribution of unbalanced and harmonic power without affecting the PCC voltage quality, and the effect is significant.

In addition, the technical solution of the present disclosure can also be realized by injecting two or more small signals into each inverter.

In some cases, if the resistance of the line impedance is equivalent to the inductive component, or the power distribution accuracy requirement is high, by adding two small signals with different frequencies, the virtual impedances of the corresponding negative sequence component and the harmonic component can be adjusted separately, or the virtual impedances of the respective two different harmonic components can be adjusted separately, to control the distribution of unbalanced power and/or harmonic power. The principle is the same as the principle of injecting a small signal, except that there is a difference between the small signal frequency calculation and the virtual impedance adjustment. In this case, the calculation formula of the small signal frequency is:

$$\omega_{ssu}^{*} = \omega_{ssu0} + k_{ssu}Q_U$$

$$\omega_{ssh}^{*} = \omega_{ssh0} + k_{ssh}Q_H$$

Where $Q_U$ and $Q_H$ represent unbalanced power and harmonic power, respectively. The virtual impedance adjustment formula is:

$$L_{vu} = L_{vu0} + k_{Lu}P_{ssu}$$

$$L_{vh} = L_{vh0} + k_{Lh}P_{ssh}$$

Where $L_{vu}$ and $L_{vh}$ represent the negative sequence virtual impedance and the harmonic virtual impedance, respectively. The principles employed in this technical solution are essentially the same as those explained above in connection with the first to eighth embodiments of the present disclosure. It is worth noting that when it is required to divide the harmonic power very accurately, it is also possible to inject a small signal into each harmonic power for control. In the above formula, $Q_U$ and $Q_H$ can also represent harmonic power of the two different harmonic orders and the principle thereof is not substantially different from the present disclosure, and should also be included in the scope of protection of the present disclosure.

The above technical solution disclosed by the present disclosure can provide even distribution of the load imbalance and the harmonic power among parallel inverters in the islanded microgrid. By introducing virtual impedance it can adjust distribution of the unbalanced and harmonic power among the inverters, and through the droop relationship between the unbalanced and harmonic power and the frequency of the introduced small signal, the size of the negative-sequence virtual impedance can be dynamically adjusted. It can ensure the even distribution of the unbalanced and harmonic power among inverters. Compared with the conventional technology, the technical solution of the present disclosure at least has one of the following advantages: firstly, the unbalanced and/or harmonic power tend to be accurately evenly distributed; secondly, it is a distributed control method, which does not require a central controller, and compatible with traditional droop control method; thirdly, it does not rely on communication lines; and fourthly, it does not require to measure line impedance.

The flowcharts and block diagrams in the above described figures illustrate the architecture, functionality, and operation of possible implementations of systems, methods, and computer program products in accordance with various embodiments of the present application. In this regard, each block of the flowchart or block diagram can represent a module, circuit, a program segment, or a portion of codes that includes one or more executable instructions for the specified logical functions. It should also be noted that in some alternative implementations, the functions noted in the blocks may also occur in a different order than the one illustrated in the drawings. For example, two blocks shown in order may in fact be executed substantially in parallel, and they may sometimes be executed in the reverse order, depending upon the functionality involved. It is also noted that each block and combinations of the block diagrams or flowcharts can be implemented by a dedicated hardware-based system that performs the specified function or operation, or can be implemented in combination of dedicated hardware and computer instructions.

The modules or units involved in the embodiments of the present application may be implemented by software or by hardware. It would be appreciated by those skilled in the art that all or part of the steps of the above-described embodiments may be implemented as a computer program or instructions executed by a CPU. When the computer program is executed by the CPU, the above-described functions defined by the above method provided by the present disclosure are performed. The program may be stored in a computer readable storage medium, which may be a read only memory, a magnetic disk or an optical disk, or the like.

**Claims**

1. A method for distributing unbalanced and harmonic power among a plurality of inverters connected in parallel, wherein each of the plurality of inverters operates in an islanded state, and wherein each of the inverters is injected with an small-AC-signal to control the distribution of the unbalanced and harmonic power, an amplitude of the small-AC-signal being $E_{ss}{}^{*}$, the method comprising:

   step 1: sampling (S201) an output voltage and an output current of each inverter, and extracting a fundamental positive sequence component of the current, a fundamental negative sequence component of the current, at least one major order of harmonic component of the current, and current components of the small-AC-signal according to the output current;
   step 2: calculating (S202) an active power P and a reactive power Q of the inverter according to the output voltage and the fundamental positive sequence component of the current of the inverter, and calculating the unbalanced and harmonic power $Q_{UH}$ according to the fundamental negative sequence component of the current and the at least one major order of harmonic component of the current;
   step 3: calculating (S203) a frequency and an amplitude of a fundamental positive sequence reference voltage according to the active power P and the reactive power Q of the inverter;
   step 4: calculating (S204) a frequency reference value $\omega_{ss}{}^{*}$ of the small-AC-signal according to the unbalanced and harmonic power $Q_{UH}$;
   step 5: calculating (S205) the active power $P_{ss}$ generated by the small-AC-signal according to the amplitude $E_{ss}{}^{*}$ of the small-AC-signal, the frequency reference value $\omega_{ss}{}^{*}$ of the small-AC-signal, and the current components of the small-AC-signal;
   step 6: calculating (S206) a virtual impedance $L_v$ according to the active power $P_{ss}$ generated by the small-AC-signal;
   step 7: calculating (S207) a voltage drop of the virtual impedance according to the virtual impedance $L_v$, the fundamental negative sequence component of the current, the at least one major order of harmonic component of the current, and the frequency of the fundamental positive sequence reference voltage;
   step 8: generating (S208) a total reference voltage according to the frequency and amplitude of the fundamental positive sequence reference voltage, the voltage drop of the virtual impedance, the amplitude of the small-AC-signal, and the frequency reference value $\omega_{ss}{}^{*}$ of the small-AC-signal; and
   step 9: regulating (S209) the output voltage of the inverter to follow the total reference voltage.

2. The method according to claim 1, wherein
   the step 1 comprises:

   step 11: sampling three-phase voltages $v_a$, $v_b$, and $v_c$ of the output voltage of the inverter, sampling three-phase currents $i_a$, $i_b$, and $i_c$ of the output current of the inverter, and transforming the three-phase voltages and the three-phase currents to a two-phase stationary coordinate system by a Clarke transformation matrix, to obtain components $v_\alpha$ and $v_\beta$ of the three-phase voltages in the two-phase stationary $\alpha\beta$ coordinate system and components $i_\alpha$ and $i_\beta$ of the three-phase currents in the two-phase stationary $\alpha\beta$ coordinate system; and
   step 12: extracting fundamental positive sequence components $i_{1\alpha}{}^{+}$ and $i_{1\beta}{}^{+}$ of the current and fundamental negative sequence components $i_{1\alpha}{}^{-}$ and $i_{1\beta}{}^{-}$ of the current, the major order of harmonic components $i_{h\alpha}$ and $i_{h\beta}$ of the current and the current components $i_{ss\alpha}{}^{+}$ and $i_{ss\beta}{}^{+}$ of the small-AC-signal in the two-phase stationary $\alpha\beta$ coordinate system according to the components $i_\alpha$ and $i_\beta$ of the three-phase currents in the two-phase stationary $\alpha\beta$ coordinate system;

   the step 2 comprises:

   step 21: calculating the active power P and the reactive power Q according to the output voltages $v_\alpha$ and $v_\beta$ in

the two-phase stationary $\alpha\beta$ coordinate system and the fundamental positive sequence components $i_{1\alpha}{}^+$ and $i_{1\beta}{}^+$ of the current in the two-phase stationary $\alpha\beta$ coordinate system; and

step 22: calculating the unbalanced and harmonic power $Q_{UH}$ according to the fundamental negative sequence components $i_{1\alpha}{}^-$ and $i_{1\beta}{}^-$ of the current and the major order of harmonic components $i_{h\alpha}$ and $i_{h\beta}$ of the current in the two-phase stationary $\alpha\beta$ coordinate system; and

the step 5 comprises:

step 51: calculating the active power $P_{ss}$ of the small-AC-signal according to the amplitude $E_{ss}{}^*$ of the small-AC-signal, the frequency reference value $\omega_{ss}{}^*$ of the small-AC-signal, and the current components $i_{ss\alpha}{}^+$ and $i_{ss\beta}{}^+$ of the small-AC-signal in the two-phase stationary $\alpha\beta$ coordinate system.

3. The method according to claim 2, wherein in the step 21, calculating the active power P and the reactive power Q according to the output voltages $v_\alpha$ and $v_\beta$ in the two-phase stationary $\alpha\beta$ coordinate system and the fundamental positive sequence components $i_{1\alpha}{}^+$ and $i_{1\beta}{}^+$ of the current in the two-phase stationary $\alpha\beta$ coordinate system with the following formula:

$$P = \frac{3}{2(\tau s+1)}\left(v_\alpha i_{1\alpha}^{+} + v_\beta i_{1\beta}^{+}\right)$$

$$Q = \frac{3}{2(\tau s+1)}\left(v_\beta i_{1\alpha}^{+} - v_\alpha i_{1\beta}^{+}\right)$$

where $\tau$ represents a time constant of a low pass filter;
in the step 22, calculating the unbalanced and harmonic power $Q_{UH}$ according to the fundamental negative sequence components $i_{1\alpha}{}^-$ and $i_{1\beta}{}^-$ of the current and the major order of harmonic components $i_{h\alpha}$ and $i_{h\beta}$ of the current in the two-phase stationary $\alpha\beta$ coordinate system with the following formula:

$$Q_{UH} = \frac{3}{2}E^*\sqrt{\left(i_{1\alpha}^{-}\right)^2 + \left(i_{1\beta}^{-}\right)^2 + \sum_h\left[\left(i_{h\alpha}\right)^2 + \left(i_{h\beta}\right)^2\right]}$$

where $E^*$ represents the amplitude of the fundamental positive sequence reference voltage and h represents a harmonic order of the at least one major order of harmonic component of the current;
the step 51 comprises:

step 511: calculating small-AC-signal reference voltages $v^*_{ss\alpha}$ and $v^*_{ss\beta}$ in the two-phase stationary $\alpha\beta$ coordinate system according to the amplitude $Ess^*$ of the small-AC-signal and the frequency reference value $\omega_{ss}{}^*$ of the small-AC-signal with the following formula:

$$v_{ss\alpha}^{*} = E_{ss}^{*}\cos\left(\omega_{ss}^{*}t\right)$$

$$v_{ss\beta}^{*} = E_{ss}^{*}\sin\left(\omega_{ss}^{*}t\right)$$

step 512: calculating the active power $P_{ss}$ generated by the small-AC-signal according to small-AC-signal reference voltages $v^*_{ss\alpha}$ and $v^*_{ss\beta}$ in the two-phase stationary $\alpha\beta$ coordinate system and the current components $i_{ss\alpha}{}^+$ and $i_{ss\beta}{}^+$ of the small-AC-signal with the following formula:

$$P_{ss} = \frac{3}{2(\tau s + 1)}\left(v_{ss\alpha}^* i_{ss\alpha}^+ + v_{ss\beta}^* i_{ss\beta}^+\right)$$

where $\tau$ represents the time constant of the low pass filter.

**4.** The method according to claim 1, wherein
the step 3 comprises:

step 31: calculating a frequency $\omega^*$ of the fundamental positive sequence reference voltage and an amplitude $E^*$ of the fundamental positive sequence reference voltage according to the active power $P$ and the reactive power $Q$ of the inverter with the following formula:

$$\omega^* = \omega_0 - k_p(P - P_0)$$

$$E^* = E_0 - k_q(Q - Q_0)$$

where $P_0$ and $Q_0$ represent rated values of the active power and reactive power of the inverter, respectively, $\omega_0$ and $E_0$ represent rated frequency and rated voltage of the inverter, respectively, and $k_p$ and $k_q$ are first and second droop coefficients, respectively, both of which are positive values;

the step 4 comprises:

step 41: calculating a frequency reference value $\omega_{ss}^*$ of the small-AC-signal according to the unbalanced and harmonic power $Q_{UH}$ with the following formula:

$$\omega_{ss}^* = \omega_{ss0} + k_{ss}Q_{UH}$$

where $\omega_{ss0}$ represents a frequency benchmark value of the small-AC-signal, and $k_{ss}$ represents the third droop coefficient; and

in the step 6, calculating the virtual impedance $L_v$ according to the active power $P_{ss}$ of the small-AC-signal with the following formula:

$$L_v = L_{v0} + k_L P_{ss}$$

where $L_{v0}$ represents a reference value of the virtual impedance and $k_L$ represents a fourth droop coefficient.

**5.** The method according to claim 4, wherein the frequency benchmark value $\omega_{ss0}$ of the small-AC-signal is different from the frequencies of the fundamental positive sequence component of the current, the fundamental negative sequence component of the current, and the major order of harmonic component of the current.

**6.** The method according to claim 4, wherein when capacities $S_1, S_2...S_n$ of the respective inverters 1, 2, ... $n$ are the same, the third droop coefficient of each inverter is the same; and when the capacities of respective inverters $S_1, S_2...S_n$ are different, the following formula applies:

$$k_{ss1}S_1 = k_{ss2}S_2 = \cdots = k_{ssn}S_n$$

where $k_{ss1},..k_{ssn}$ represent the third droop coefficients of the inverters 1, 2...n, respectively.

**7.** The method according to claim 4, wherein the step 7 comprises:

step 71: calculating a fundamental negative sequence component of the voltage drop of the virtual impedance according to the virtual impedance $L_v$, the fundamental negative sequence component of the current and the frequency of the fundamental positive sequence reference voltage;

step 72: calculating a major order of harmonic component of the voltage drop of the virtual impedance according to the virtual impedance $L_v$, the major order of harmonic component of the current and the frequency of the fundamental positive sequence reference voltage; and

step 73: calculating a voltage drop of the virtual impedance according to the negative impedance component of the voltage drop of the virtual impedance and the major order of harmonic component of the voltage drop of the virtual impedance.

8.  The method according to claim 1, wherein the amplitude $E^*_{ss}$ of the small-AC-signal is less than or equal to 3V.

9.  The method according to claim 1, wherein a number of the at least one major order of harmonic component of the current is more than one.

10. The method according to claim 9, wherein the at least one major order of harmonic component of the current includes a first major order of harmonic component of the current and a second major order of harmonic component of the current, and the unbalanced and harmonic power $Q_{UH}$ is calculated according to the fundamental negative sequence component of the current, the first major order of harmonic component of the current, and the second major order of harmonic component of the current.

11. A control device for distributing unbalanced and harmonic power among a plurality of inverters connected in parallel, wherein each of the plurality of inverters operates in an islanded state, and wherein each of the inverters is injected with an small-AC-signal to control the distribution of the unbalanced and harmonic power, an amplitude of the small-AC-signal being $E_{ss}^*$, the control device comprising:

a sampling and signal extraction module configured to sample an output voltage and an output current of each inverter, and extract a fundamental positive sequence component of the current, a fundamental negative sequence component of the current, at least one major order of harmonic component of the current, and current components of the small-AC-signal according to the output current;

a power calculation module configured to calculate an active power P and a reactive power Q of the inverter according to the output voltage of the inverter and the fundamental positive sequence component of the current of the inverter, and calculate the unbalanced and harmonic power $Q_{UH}$ according to the fundamental negative sequence component of the current and the at least one major order of harmonic component of the current;

a positive-sequence-reference-voltage calculation module configured to calculate a frequency and an amplitude of a fundamental positive sequence reference voltage according to the active power P and the reactive power Q of the inverter;

an AC-small-signal-frequency-reference-value calculation module configured to calculate a frequency reference value $\omega_{ss}^*$ of the small-AC-signal according to the unbalanced and harmonic power $Q_{UH}$;

a small-signal-active-power calculation module configured to calculate the active power $P_{ss}$ generated by the small-AC-signal according to the amplitude $E_{ss}^*$ of the small-AC-signal, the frequency reference value $\omega_{ss}^*$ of the small-AC-signal, and the current components of the small-AC-signal;

a virtual-impedance calculation module configured to calculate a virtual impedance $L_v$ according to the active power $P_{ss}$ generated by the small-AC-signal;

a voltage-drop calculation module configured to calculate a voltage drop of the virtual impedance according to the virtual impedance $L_v$, the fundamental negative sequence component of the current, the at least one major order of harmonic component of the current, and the frequency of the fundamental positive sequence reference voltage;

a total-reference-voltage generation module configured to generate a total reference voltage according to the frequency and amplitude of the fundamental positive sequence reference voltage, the voltage drop of the virtual impedance, the amplitude of the small-AC-signal, and the frequency reference value $\omega_{ss}^*$ of the small-AC-signal; and

an output-voltage control module configured to regulate the output voltage of the inverter to follow the total reference voltage.

12. The control device according to claim 11, wherein
the sampling and signal extraction module comprises:

a sampling sub-module configured to sample three-phase voltages $v_a$, $v_b$, and $v_c$ of the output voltage of the inverter, sample three-phase currents $i_a$, $i_b$, and $i_c$ of the output current of the inverter, and transform the three-phase voltages and the three-phase currents to a two-phase stationary $\alpha\beta$ coordinate system by a Clarke transformation matrix, to obtain components $v_\alpha$ and $v_\beta$ of the three-phase voltages in the two-phase stationary $\alpha\beta$ coordinate system and components $i_\alpha$ and $i_\beta$ of the three-phase currents in the two-phase stationary $\alpha\beta$ coordinate system; and

a signal extraction sub-module configured to extract fundamental positive sequence components $i_{1\alpha}^+$ and $i_{1\beta}^+$ of the current and fundamental negative sequence components $i_{1\alpha}^-$ and $i_{1\beta}^-$ of the current, the major order of harmonic components $i_{h\alpha}$ and $i_{h\beta}$ of the current and the current components $i_{ss\alpha}^+$ and $i_{ss\beta}^+$ of the small-AC-signal in the two-phase stationary $\alpha\beta$ coordinate system according to the components $i_\alpha$ and $i_\beta$ of the three-phase currents in the two-phase stationary $\alpha\beta$ coordinate system; and

the power calculation module comprises:

a fundamental-active-power-and-reactive-power calculation sub-module configured to calculate the active power $P$ and the reactive power $Q$ according to the output voltages $v_\alpha$ and $v_\beta$ in the two-phase stationary $\alpha\beta$ coordinate system and the fundamental positive sequence components $i_{1\alpha}^+$ and $i_{1\beta}^+$ of the current in the two-phase stationary $\alpha\beta$ coordinate system; and

an unbalanced-and-harmonic-power calculation sub-module configured to calculate the unbalanced and harmonic power $Q_{UH}$ according to the fundamental negative sequence components $i_{1\alpha}^-$ and $i_{1\beta}^-$ of the current and the major order of harmonic components $i_{h\alpha}$ and $i_{h\beta}$ of the current in the two-phase stationary $\alpha\beta$ coordinate system.

13. The control device according to claim 12, wherein the fundamental-active-power-and-reactive-power calculation sub-module is configured to calculate the active power $P$ and the reactive power $Q$ according to the output voltages $v_\alpha$ and $v_\beta$ in the two-phase stationary $\alpha\beta$ coordinate system and the fundamental positive sequence components $i_{1\alpha}^+$ and $i_{1\beta}^+$ of the current in the two-phase stationary $\alpha\beta$ coordinate system with the following formula:

$$P = \frac{3}{2(\tau s + 1)}\left(v_\alpha i_{1\alpha}^+ + v_\beta i_{1\beta}^+\right)$$

$$Q = \frac{3}{2(\tau s + 1)}\left(v_\beta i_{1\alpha}^+ - v_\alpha i_{1\beta}^+\right)$$

where $\tau$ represents a time constant of a low pass filter;

the unbalanced-and-harmonic-power calculation sub-module is configured to calculate the unbalanced and harmonic power $Q_{UH}$ according to the fundamental negative sequence components $i_{1\alpha}^-$ and $i_{1\beta}^-$ of the current and the major order of harmonic components $i_{h\alpha}$ and $i_{h\beta}$ of the current in the two-phase stationary $\alpha\beta$ coordinate system with the following formula:

$$Q_{UH} = \frac{3}{2}E^*\sqrt{\left(i_{1\alpha}^-\right)^2 + \left(i_{1\beta}^-\right)^2 + \sum_h\left[\left(i_{h\alpha}\right)^2 + \left(i_{h\beta}\right)^2\right]}$$

where $E^*$ represents the amplitude of the fundamental positive sequence reference voltage and h represents a harmonic order of the major order of harmonic components;

the small-signal-active-power calculation module is configured to

calculate small-AC-signal reference voltages $v^*_{ss\alpha}$ and $v^*_{ss\beta}$ in the two-phase stationary $\alpha\beta$ coordinate system according to the amplitude $Ess^*$ of the small-AC-signal and the frequency reference value $\omega_{ss}^*$ of the small-AC-signal with the following formula:

$$v^*_{ss\alpha} = E^*_{ss} \cos\left(\omega^*_{ss} t\right)$$

$$v^*_{ss\beta} = E^*_{ss} \sin\left(\omega^{\boldsymbol{5}}_{ss} t\right) \qquad ;$$

and

calculate the active power $P_{ss}$ generated by the small-AC-signal according to small-AC-signal reference voltages $v^*_{ss\alpha}$ and $v^*_{ss\beta}$ in the two-phase stationary $\alpha\beta$ coordinate system and the current components $i_{ss\alpha}{}^+$ and $i_{ss\beta}{}^+$ of the small-AC-signal with the following formula:

$$P_{ss} = \frac{3}{2(\tau s + 1)}\left(v^*_{ss\alpha} i^{+}_{ss\alpha} + v^*_{ss\beta} i^{+}_{ss\beta}\right)$$

where $\tau$ represents the time constant of the low pass filter.

14. The control device according to claim 11, wherein
the positive-sequence-reference-voltage calculation module is configured to calculate a frequency $\omega^*$ of the fundamental positive sequence reference voltage and an amplitude $E^*$ of the fundamental positive sequence reference voltage according to the active power $P$ and the reactive power $Q$ of the inverter with the following formula:

$$\omega^* = \omega_0 - k_p(P - P_0)$$

$$E^* = E_0 - k_q(Q - Q_0)$$

where $P_0$ and $Q_0$ represent rated values of the active power and reactive power of the inverter, respectively, $\omega_0$ and $E_0$ represent rated frequency and rated voltage of the inverter, respectively, and $k_p$ and $k_q$ are first and second droop coefficients, respectively, both of which are positive values;
the AC-small-signal-frequency-reference-value calculation module is configured to calculate a frequency reference value $\omega_{ss}^*$ of the small-AC-signal according to the unbalanced and harmonic power $Q_{UH}$ with the following formula:

$$\omega^*_{ss} = \omega_{ss0} + k_{ss}Q_{UH}$$

where $\omega_{ss0}$ represents a frequency benchmark value of the small-AC-signal and $k_{ss}$ represents the third droop coefficient; and
the virtual-impedance calculation module is configured to calculate the virtual impedance $L_v$ according to the active power $P_{ss}$ of the small-AC-signal with the following formula:

$$L_v = L_{v0} + k_L P_{ss}$$

where $L_{v0}$ represents a reference value of the virtual impedance and $k_L$ represents a fourth droop coefficient.

15. The control device according to claim 14, wherein the frequency benchmark value $\omega_{ss0}$ of the small-AC-signal is different from the frequencies of the fundamental positive sequence component of the current, the fundamental negative sequence component of the current, and the major order of harmonic component of the current.

16. The control device according to claim 14, wherein when capacities $S_1, S_2 ... S_n$ of the respective inverters 1, 2, ... $n$ are the same, the third droop coefficient of each inverter is the same; and when the capacities of respective inverters $S_1, S_2 ... S_n$ are different, the following formula applies:

$$k_{ss1}S_1 = k_{ss2}S_2 = \cdots = k_{ssn}S_n$$

where $k_{ss1},..k_{ssn}$ represent the third droop coefficients of the inverters 1, 2...n, respectively.

17. The control device according to claim 14, wherein the voltage-drop calculation module is configured to
calculate a fundamental negative sequence component of the voltage drop of the virtual impedance according to the virtual impedance $L_v$, the fundamental negative sequence component of the current and the frequency of the fundamental positive sequence reference voltage;
calculate a major order of harmonic component of the voltage drop of the virtual impedance according to the virtual impedance $L_v$, the major order of harmonic component of the current and the frequency of the fundamental positive sequence reference voltage; and
calculate a voltage drop of the virtual impedance according to the negative impedance component of the voltage drop of the virtual impedance and the major order of harmonic component of the voltage drop of the virtual impedance.

18. The control device according to claim 11, wherein the amplitude $E^*_{ss}$ of the small-AC-signal is less than or equal to 3V.

19. The control device according to claim 11, wherein a number of the at least one major order of harmonic component of the current is more than one.

20. The control device according to claim 19, wherein the at least one major order of harmonic component of the current includes a first major order of harmonic component of the current and a second major order of harmonic component of the current, and the unbalanced-and-harmonic-power calculation sub-module is configured to calculate the unbalanced and harmonic power $Q_{UH}$ according to the fundamental negative sequence component of the current, the first major order of harmonic component of the current, and the second major order of harmonic component of the current.

Fig.1

Fig.2

Sampling an output voltage and an output current of the inverter, and extracting a fundamental positive sequence component of the current, a fundamental negative sequence component of the current, major order of harmonic component of the current, and current components of the small-AC-signal

S201

Calculating an active power P and a reactive power Q of the inverter, calculating the unbalanced and harmonic power $Q_{UH}$

S202

Calculating a frequency and an amplitude of a fundamental positive sequence reference voltage

S203

Calculating a frequency reference value $\omega_{ss}^*$ of the small-AC-signal

S204

Calculating the active power $P_{ss}$ generated by the small-AC-signal

S205

Calculating a virtual impedance $L_v$

S206

Calculating a voltage drop of the virtual impedance

S207

Generating a total reference voltage according to the frequency and amplitude of the fundamental positive sequence reference voltage, the voltage drop of the virtual impedance, the amplitude and the frequency reference value $\omega_{ss}^*$ of the small-AC-signal

S208

Regulate the output voltage of the inverter to follow the total reference voltage

S209

Fig.3A

Sampling an output voltage and an output current of the inverter, and extracting a fundamental positive sequence component of the current, a fundamental negative sequence component of the current, and current components of the small-AC-signal
S301

Calculating an active power P and a reactive power Q of the inverter, calculating the unbalanced power Qu
S302

Calculating a frequency and an amplitude of a fundamental positive sequence reference voltage
S303

Calculating a frequency reference value $\omega_{ss}$* of the small-AC-signal
S304

Calculating the active power $P_{ss}$ generated by the small-AC-signal
S305

Calculating a virtual impedance $L_v$
S306

Calculating a voltage drop of the virtual impedance
S307

Generating a total reference voltage according to the frequency and amplitude of the fundamental positive sequence reference voltage, the voltage drop of the virtual impedance, the amplitude and the frequency reference value $\omega_{ss}$* of the small-AC-signal
S308

Regulating the output voltage of the inverter to follow the total reference voltage
S309

Fig.3B

Sampling an output voltage and an output current of the inverter, and extracting a fundamental positive sequence component of the current, major order of harmonic component of the current, and current components of the small-AC-signal — S401

Calculating an active power P and a reactive power Q of the inverter, calculating the harmonic power $Q_H$ — S402

Calculating a frequency and an amplitude of a fundamental positive sequence reference voltage — S403

Calculating a frequency reference value $\omega_{ss}$* of the small-AC-signal — S404

Calculating the active power $P_{ss}$ generated by the small-AC-signal — S405

Calculating a virtual impedance $L_v$ — S406

Calculating a voltage drop of the virtual impedance — S407

Generating a total reference voltage according to the frequency and amplitude of the fundamental positive sequence reference voltage, the voltage drop of the virtual impedance, the amplitude and the frequency reference value $\omega_{ss}$* of the small-AC-signal — S408

Regulating the output voltage of the inverter to follow the total reference voltage — S409

Fig.3C

```
                    ╭─────────────╮
                    │    Start    │
                    ╰──────┬──────╯
                           │
                           ▼
          ┌─────────────────────────────┐
          │     Sampling an output      │
    ┌────▶│      voltage and an         │
    │     │       output current        │
    │     │       of the inverter       │
    │     └───────────────┬─────────────┘
    │                     │
    │                     ▼
    │     ┌─────────────────────────────┐
    │     │      Signal extraction       │
    │     └───────────────┬─────────────┘
    │                     │
    │                     ▼
    │     ┌─────────────────────────────┐
    │     │     Calculating power        │
    │     │   P, Q, Quн and Pss         │
    │     └───────────────┬─────────────┘
    │                     │
    │                     ▼
    │     ┌─────────────────────────────┐
    │     │        Improved              │
    │     │      droop control           │
    │     └───────────────┬─────────────┘
    │                     │
    │                     ▼
    │     ┌─────────────────────────────┐
    │     │      Generating a            │
    │     │    reference voltage         │
    │     └───────────────┬─────────────┘
    │                     │
    │                     ▼
    │     ┌─────────────────────────────┐
    │     │       Regulating             │
    └─────│      output voltage          │
          └─────────────────────────────┘
```

Fig.3D

Fig.4

Fig.5

Fig.6

Europäisches
Patentamt

European
Patent Office

Office européen
des brevets

# EUROPEAN SEARCH REPORT

Application Number

EP 18 21 1065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 105 071 405 B (UNIV ELECTRONIC SCIENCE & TECH) 6 June 2017 (2017-06-06) * the whole document * | 1-20 | INV. H02J3/01 H02J3/38 H02J3/46 |
| X | BAOJIN LIU ET AL: "A novel unbalanced power sharing control method for an islanded microgrid", 2017 IEEE 3RD INTERNATIONAL FUTURE ENERGY ELECTRONICS CONFERENCE AND ECCE ASIA (IFEEC 2017 - ECCE ASIA), IEEE, 3 June 2017 (2017-06-03), pages 1617-1622, XP033129765, DOI: 10.1109/IFEEC.2017.7992289 [retrieved on 2017-07-25] * the whole document * | 1-20 | |
| A | SONG XIAN-WEN ET AL: "Dual reference frame scheme for distributed generation grid-connected inverter under unbalanced grid voltage conditions", POWER ELECTRONICS SPECIALISTS CONFERENCE, 2008. PESC 2008. IEEE, IEEE, PISCATAWAY, NJ, USA, 15 June 2008 (2008-06-15), pages 4552-4555, XP031300669, ISBN: 978-1-4244-1667-7 * the whole document * | 1-20 | TECHNICAL FIELDS SEARCHED (IPC) H02J |

The present search report has been drawn up for all claims

| Place of search | Date of completion of the search | Examiner |
|---|---|---|
| Munich | 23 January 2019 | Telega, Pawel |

EPO FORM 1503 03.82 (P04C01)

## ANNEX TO THE EUROPEAN SEARCH REPORT
## ON EUROPEAN PATENT APPLICATION NO.

EP 18 21 1065

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2019

| Patent document cited in search report | | Publication date | Patent family member(s) | Publication date |
|---|---|---|---|---|
| CN 105071405 | B | 06-06-2017 | NONE | |

EPO FORM P0459

For more details about this annex : see Official Journal of the European Patent Office, No. 12/82